(19) Europäisches Patentamt
European Patent Office
Office européen des brevets

(11) EP 4 671 197 A1

# (12) EUROPEAN PATENT APPLICATION

(43) Date of publication:
**31.12.2025 Bulletin 2026/01**

(21) Application number: **24185404.1**

(22) Date of filing: **28.06.2024**

(51) International Patent Classification (IPC):
***C01B 3/08*** *(2006.01)*

(52) Cooperative Patent Classification (CPC):
**C01B 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ost - Ostschweizer Fachhochschule**
**8640 Rapperswil (CH)**

(72) Inventors:
- **HALLER, Michel Yves**
  **9620 Lichtensteig (CH)**
- **BÄUERLE, Yvonne Isabell**
  **5442 Fislisbach (CH)**
- **HÜPPI, Jan**
  **8725 Ernetschwil (CH)**
- **DUDITA-KAUFFELD, Mihaela**
  **8640 Rapperswil (CH)**
- **HEEL, Andre**
  **8600 Dübendorf (CH)**
- **WELTE, Bastian**
  **78462 Konstanz (DE)**
- **AGOTE ARAN, Miren**
  **5408 Ennetbaden (CH)**

(74) Representative: **Piticco, Lorena**
**Isler & Pedrazzini AG**
**Giesshübelstrasse 45**
**Postfach 1772**
**8027 Zürich (CH)**

## (54) PRODUCTION DEVICE AND METHOD FOR PRODUCING HYDROGEN GAS

(57) A method of producing hydrogen gas comprises the step of contacting at least one metal compound with water in the reactor vessel (2) to generate hydrogen gas. The metal compound is provided as grains that have a grain size of at least 0.2 millimeter. A production device (1) for producing hydrogen gas according to said method comprises at least one reactor vessel (2) for receiving the metal compound and water, and further comprises at least one dosing arrangement (4) that is configured to supply one or more doses of the metal compound into the reactor vessel (2).

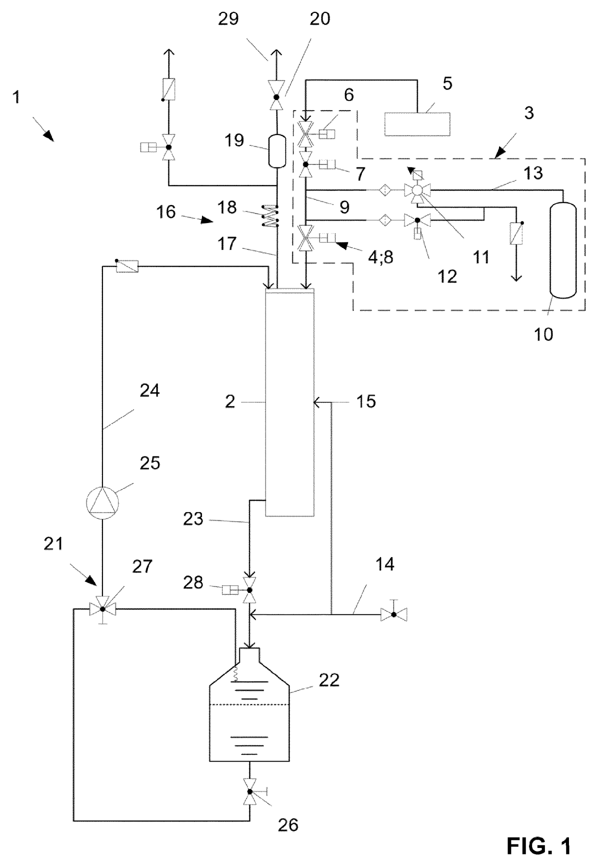


FIG. 1



Processed by Luminess, 75001 PARIS (FR)

## Description

TECHNICAL FIELD

The present invention relates to a method of producing hydrogen gas according to claim 1 and to a production device for producing hydrogen gas according to claim 13.

PRIOR ART

The implementation of the energy transition and decarbonization of energy systems is progressing. Wind, hydro and solar power are now cheaper to generate than nuclear power or electricity from fossil fuel power plants. However, renewables such as wind and solar power, are dependent on the weather and energy storage and transport technologies are needed to make them available anytime and anywhere. For short-term storage of hours or a few days, there are cost-effective and market-ready technologies such as heat storage or batteries. For seasonal storage, the only economically feasible option to date has been water reservoirs, which allow the runoff of precipitation and meltwater to be delayed. However, the expansion potential of this technology is limited in certain geographical locations such as the Alps and additional options for long term storage of energy are needed.

SUMMARY OF THE INVENTION

It is an object of the present invention to provide an improved method of producing hydrogen gas preferably based on renewable energy. In particular, it is an object to provide a method that enables a safe and efficient production of hydrogen gas.

This object is achieved with a method according to claim 1. In particular, a method of producing hydrogen gas is provided, wherein the method comprises the step of contacting at least one metal compound with water in a reactor vessel to generate hydrogen gas. The at least one metal compound is provided as grains that have a grain size of at least 0.2 millimeter, preferably of at least 0.5 millimeter.

That is, the present invention is based on the insight that a reaction between a metal compound and water generates hydrogen gas that can be used as alternative energy source.

To this end a reduction of water using a suitable metal compound takes place, whereby hydrogen gas ($H_2$) and heat is generated. Thus, the metal compound preferably is a reducing compound and/or preferably has a negative redox potential.

It is known that the finer a powder is, the higher the risk of dust explosions. In fact, combustible dusts with a small grain size can form explosive atmospheres, wherein the hazard increases with decreasing grain size. In addition, it has been shown that the $K_{st}$-value decreases by increasing grain size. The $K_{st}$-value is defined as:

$$K_{St} = (dP/dt)_{max}\ V^{1/3},$$

wherein $(dP/dt)_{max}$ is the peak maximum rate of pressure rise (bar/s) and V is the total internal volume of the test vessel ($m^3$).

A key aspect of the invention is that the metal compound being used for the production of hydrogen gas is provided as grains. Furthermore, the metal compound has a grain size of 0.2 millimeter or more, preferably of 0.5 millimeter or more.

The grain size can also be referred to as grain size and corresponds to the diameter of an individual grain.

The grain size is determined by a method similar to ISO 13322-2:2021" based in dynamic digital image processing, e.g. using a Camsizer (Camsizer X2 Retsch). In particular, the grain sizes were determined by a Camsizer X2 grain size analyser from Retsch Technologies. For the measurements, ca. 1 g of grains were placed in the sample holder and the granules were dispersed in air flow through a Venturi nozzle (dispersion pressure was set at 95 kPa) before reaching the measurement field to avoid agglomerations. For determining the size distribution, the instrument uses the principle of digital image processing, during measurement the dispersed grain stream passes through two LED stroboscopic light waves, with the shadow projections of the grains being recorded by two digital cameras.

In other words, the metal compound is provided as a grain having a grain size that is preferably not capable of forming explosive mixtures with air under normal pressure and temperature conditions as it can be the case with powdery metal compounds or metal compounds in the form of pellets.

The metal compound is preferably not powdery and/or not pelletized. A powdery compound is understood as a compound having a grain size or diameter of less than 0.2 millimeter. A pelletized compound is understood as a compound comprising compacted material,.

The metal compound can have a spherical shape, an oval shape, or an ill shape. Additionally or alternatively, the metal compound can have a flat surface or an uneven surface.

The metal compound preferably is a metal alloy. The primary metal of the metal alloy preferably is aluminium (Al), iron (Fe) or silicon (Si). Additionally or alternatively, at least one alloying element preferably of the list of primary metals and/or of aluminium (Al), iron (Fe), silicon (Si), copper (Cu), manganese (Mn), magnesium (Mg), lithium (Li), calcium (Ca), cobalt (Co), zinc (Zn) and mixtures thereof.

That is, the metal compound preferably is a metal alloy, such as an aluminium alloy.

In the following, possible reactions of aluminium with water in order to generate hydrogen gas depending on the mole ratio of the reactants as well as on the reaction temperature is outlined for explanatory purposes.

Reaction temperature between 20° - 280°C:

$$2Al + 6H_2O \rightarrow 2Al(OH)_3 + 3H_2$$

$$2Al + 4H_2O \rightarrow 2AlO(OH) + 3H_2.$$

The process is highly exothermic, with $\Delta Hr \sim 280$ kJ/mol $H_2$ at a reaction temperature in the range of 50°C -100°C. Hence, the method according to the invention preferably furthermore generates heat as an energy source.

However, as follows from the above equations, although the reaction between aluminium and water is thermodynamically favorable, the formation of an aluminium oxide layer inhibits the reaction as it prevents water from coming into direct contact with the aluminium metal core. As will be outlined in greater detail below, the method enables a continuous removal of any oxide layer being formed to attain an effective production of hydrogen gas.

The metal compound, before being provided in the reactor vessel, is preferably subjected to mechanical stress. Said mechanical stress preferably corresponds to pulling and/or crushing the metal compound. Additionally or alternatively, said mechanical stress preferably induces directional boundary structures in the metal lattice of the metal compound. Directional boundary structures in the metal lattice are understood as not being chaotic in all directions, but clearly directional.

That is, before being provided into the reactor vessel, the metal compound is preferably subjected to mechanical stress. The mechanical stress can induce directional boundary structures in the metal lattice of the metal compound that increase a reaction speed of the hydrogen gas generating reaction as compared to untreated metal compounds. Said mechanical stress can be applied by pulling the metal compound into a wire. Said wire is then preferably cut or otherwise reduced to pieces of metal compounds of a desired size and/or shape. However, many other ways of applying mechanical stress to the metal compounds are conceivable, such as crushing bars, foils or other forms of metal compounds including metal scrap fractions.

One or more doses of the metal compound are preferably supplied into the reactor vessel via at least one dosing arrangement. Additionally or alternatively, the metal compound is preferably supplied into the reactor vessel in solid form. Additionally or alternatively, the metal compound is preferably supplied from at least one feeding arrangement comprising the metal compound, wherein the feeding arrangement particularly preferably supplies the metal compound to the dosing arrangement.

Hence, in the present method the metal compound is preferably supplied in doses by using at least one dosing arrangement being capable of dosing the metal compounds into the reactor vessel. This is in contrast to methods that supply lye onto a metal compound matrix or that mix a water-powder slurry with a metal compound powder, for instance. These methods have considerable disadvantages, such as the powder being explosive and the reaction of a metal compound matrix with lye cannot be controlled such as stopped once it has started.

The reactor vessel, in particular via the feeding arrangement and/or the dosing arrangement, is preferably closed towards an outside, in an air-tight manner. In other words, it is preferred that the feeding arrangement and/or the dosing arrangement is configured to close the reactor vessel towards an outside in an air-tight manner. A pressure in the reactor vessel is above ambient pressure, the pressure preferably being 0.5 bar above ambient (barg) or more.

The dosing arrangement is preferably part of the feeding arrangement and vice versa. For example, and as will be explained below, the dosing arrangement can comprise or consist of at least one valve that is functionally and/or structurally in connection with one or more valves of the feeding arrangement. As such, the method enables a dosing of the metal compound preferably via its dosing arrangement into the reactor vessel even with an overpressure of hydrogen gas being generated within the reactor vessel in such a way that no or only negligible amounts of hydrogen gas can escape.

To this end it is preferred that the feeding arrangement and/or the dosing arrangement comprises one or more valve devices.

For example, the feeding arrangement can comprise at least two valves, designated first valve and second valve, being arranged in a linear manner, and the dosing arrangement can comprise at least one valve, designated third valve. The first valve is preferably in connection with the second valve, wherein the second valve is furthermore in connection with

the third valve, and wherein the third valve is furthermore in connection with the reactor vessel such, that the metal compound can be supplied into a connection element connecting the second valve and the third valve while the first and second valves are at least temporarily both opened, and such, that after the metal compound is supplied into the connection element, at least the second valve can be closed and the third valve can be opened while the other two valves are closed, whereby the at least one dose of the metal compound is supplied into the reactor vessel. The first valve and/or the third valve are preferably dosing valves. The second valve preferably is a gas-tight valve, for instance a ball valve.

Hence, a desired amount of the metal compound can be supplied into the connection element such as a tube or cavity that connects the second valve and the third valve with one another by opening the first valve and - preferably with a short time delay - the second valve, such that both are open simultaneously or at least with a time overlap. After supplying the desired amount of metal compound, at least the second valve is closed and the third valve is opened, preferably at intervals or at once, to dose the metal compound into the reactor vessel.

Other valves and/or valve arrangements are however likewise conceivable. For instance, the dosing arrangement can comprise at least one valve device comprising a rotating element being rotatable about an axis of rotation and comprising one or more holes or cavities that are configured to receive the metal compound. Depending on a rotational position of the rotating element, specific cavities are open towards the reactor vessel or open towards the feeding arrangement. The rotating element can have the shape of a disc. The valve device is preferably in connection with the feeding arrangement and the reactor vessel.

It is furthermore conceivable that a combination of valve devices is present. For instance, the dosing arrangement can comprise a valve device comprising the rotating element as just described, and wherein said valve device is in connection with the reactor vessel and furthermore with a valve such as a dosing valve as described previously. Said connection is again preferably provided via at least one connection element such as a tube or cavity.

It is furthermore preferred that the connection element, for instance the tube or cavity, can be purged with at least one purging gas such as nitrogen or an inert gas such as argon or helium to remove traces of air, hydrogen gas or reaction byproducts such as gases, for instance, that may enter from the reactor vessel at time of dosing the metal compound into the reactor vessel, and/or to adjust a pressure within the connection element to a value closer to a pressure in the reactor vessel than to the ambient pressure. In particular, it is preferred that a pressure within the connection element essentially equals or is close to a pressure within the reactor vessel and/or a pressure within the connection element preferably is above ambient pressure, for instance 0.5 barg or more.

It is furthermore preferred that the connection element is in connection with at least one purging device. The purging device preferably comprises at least one of a two-way valve, pressure reducer, check valve, and at least one pipe or the like that connects the purging device, in particular the purging gas, with the connection element.

Hence, the method according to the invention can produce hydrogen gas in the reaction vessel while there is overpressure in the reactor vessel, and wherein the reactor vessel preferably is part of a closed reactor system. As a consequence, a hydrogen gas ($H_2$) loss rate of the produced hydrogen gas is low, in particular 0.2 % of hydrogen produced or less.

The dosing arrangement, in particular its valve(s) or valve device(s) can be arranged and configured such as to be purged. For example, the purging device can be configured and arranged such as to purge the holes of the rotating element being configured to receive the metal compound with inert gas, water or an aqueous solution.

The metal compound in the reactor vessel is preferably kept in motion by buoyancy of the hydrogen gas and/or thermal convection and/or forced gas-bubbling and/or by a flow of one or more liquid compounds and/or compositions that are preferably produced during the production of the hydrogen gas within the reaction vessel and/or by at least one stirring device being arranged within the reaction vessel.

The metal compound is preferably contacted with water in the reactor vessel at a temperature being below or at the boiling point of the aqueous solution.

Hence, in the event of the metal compound being an aluminium compound at least one of the following reactions preferably occurs in the reactor vessel: $2Al + 6H_2O \rightarrow 2Al(OH)_3 + 3H_2$ and $2Al + 4H_2O \rightarrow 2AlO(OH) + 3H_2$.

The reactor vessel is preferably in connection with at least one source of water such that water can be supplied into the reactor vessel. To this end it is conceivable that the source of water is connected to the reactor vessel, for instance via at least one pipe or the like. The source of water can be a vessel that comprises water, a water supply network, etc.

The metal compound is preferably contacted with water in the reactor vessel at an alkaline pH-value and/or at a pH value being 8 or more. Additionally or alternatively, at least one agent capable of removing a metal oxide layer being present at initio or formed during the hydrogen gas generation is preferably present in the reactor vessel. Additionally or alternatively, at least one of an oxide promoter, a salt promoter, a hydroxide promoter, a molten metal alloy, an alkaline agent, or combinations thereof are preferably present, in particular in solution, in the reactor vessel.

That is, the metal compound, water and an oxide promoter and/or a salt promoter and/or a hydroxide promoter and/or an acid promoter and/or a molten metal alloy and/or an alkaline agent are preferably present in the reactor vessel in order to generate the hydrogen gas.

To this end it is particularly preferred that an alkaline agent, in particular an alkaline solution, is present in the

reactor vessel and/or that the hydrogen gas is generated at an alkaline pH-value such as at a pH-value of 8 or more.

Various alkaline agents are conceivable and are well-known in the art. For example, sodium hydroxide (NaOH) or potassium hydroxide (KOH), preferably in solution, can be supplied into the reactor vessel. For example, an alkaline NaOH-solution comprising an NaOH concentration of 1-6 M could be present in the reactor vessel.

However, other agents that are preferably capable of removing an oxide layer being formed during the hydrogen gas generating reaction are likewise preferred such as an oxide promoter, a salt promoter, a hydroxide promoter, or a molten metal alloy.

Metal hydroxide and/or metal oxohydroxide is preferably formed during the generation of the hydrogen gas in the reactor vessel. A concentration of the metal compound in the reactor vessel is preferably close to or above a saturation level of the forming metal hydroxide and/or metal oxohydroxide in the reactor vessel. The metal hydroxide being precipitated in the reactor vessel or in at least one separation vessel which preferably is in fluid communication with the reactor vessel. Alternatively, a concentration of the metal compound in the reactor vessel is preferably below a level of spontaneously forming metal hydroxide and/or oxohydroxide in the reactor vessel. The metal hydroxide being precipitated in at least one separation vessel is preferably in fluid communication with the reactor vessel preferably after reducing a temperature compared to the temperature of the reaction vessel.

For example, the reaction of a metal compound such as aluminium with a sodium hydroxide solution to produce hydrogen gas may also lead to sodium aluminate products in solution:

$$2Al + 2NaOH + 6H2O \rightarrow 2NaAl(OH)_4 + 3H_2$$

$$NaAl(OH)_4 \rightarrow NaOH + Al(OH)_3.$$

Upon the decay of the aluminate into the metal hydroxide and the precipitation of the metal hydroxide, here of $Al(OH_3)$, the present method enables regeneration of the alkaline solution, here of sodium hydroxide being not consumed. As will be explained in greater detail further below, said regeneration preferably takes place via at least one regeneration arrangement that is configured to return one or more compounds and/or compositions produced during the hydrogen production, for example from the separation vessel, into the reactor vessel. Hence, the overall reaction that can take place in the method according to the invention preferably is $2Al + 6H_2O \rightarrow 2Al(OH)_3 + 3H_2$ or $2Al + 4H_2O \rightarrow 2AlO(OH) + 3H_2$ where only aluminium and water are the consumed raw materials to produce hydrogen gas and aluminium hydroxide or aluminium oxohydroxide. It should be noted that the present example refers to aluminium as the metal compound, although of course the same applies to the other conceivable compounds.

The precipitation of $Al(OH)_3$ requires aluminate concentrations above the solubility limit at given conditions of temperature and alkalinity. However, the presence of aluminate products in solution is known to decrease the reaction rate.

The present method provides for a compromise between hydrogen gas generation and product recovery.

Namely, the reactor vessel can be operated such that a saturation level of the metal hydroxide being formed upon the reaction between the metal compound and the water is exceeded.

A precipitation of the metal hydroxide is preferably occurring in the reactor vessel itself or in one or several separation vessels being in fluid communication with the reactor vessel and into which a compound and/or composition produced during the hydrogen gas generating reaction, preferably in solution, is preferably transferred to.

It is furthermore preferred to decrease the temperature in order to facilitate precipitation of said compound and/or composition.

However, it is likewise conceivable that the reactor vessel is operated such that a saturation level of the metal hydroxide or oxohydroxide being formed upon the reaction between the metal compound and the water is below the saturation level of the forming metal hydroxide. A precipitation of the metal hydroxide is preferably occurring in one or several separation vessels being in fluid communication with the reactor vessel and into which a compound and/or composition produced during the hydrogen gas reaction, preferably in solution, is preferably transferred to.

It is furthermore preferred to decrease the temperature in order to facilitate precipitation of said compound and/or composition.

In any case it is preferred that said compound and/or composition, preferably in solution, is transferred from the reactor vessel into the separation vessel by pumping, sucking or pushing, for instance via pressure provided by the hydrogen gas.

To this end it is preferred that the reactor vessel is in connection with the at least one separation vessel for instance via a pipe or the like. Said pipe can be connected to a hole in the reactor vessel, for instance to a hole at a side or bottom of the reactor vessel. However, it is likewise conceivable that the pipe is connected to the reactor vessel such as to be immersed into a compound and/or composition being comprised within the reactor vessel. As outlined above, said compound and/or composition preferably is formed during the hydrogen gas reaction. For instance, in the event of the metal compound being an aluminium alloy that is contacted with water and an alkaline agent such as NaOH or KOH said compound preferably is aluminate in solution.

The hydrogen gas is preferably removed from the reactor vessel via at least one gas removal arrangement and in particular by an overpressure inside the reactor vessel. Additionally or alternatively, water and/or an aqueous solution comprising one or more compounds and/or compositions formed during the hydrogen gas production such as metal hydroxide are preferably returned as one or more reagents into the reactor vessel.

That is, it is preferred that the generated hydrogen gas is removed from the reactor vessel via at least one gas removal arrangement. For example, at least one outlet pipe for draining the hydrogen gas out of the reactor vessel could be provided. Said outlet pipe is preferably arranged in an upper part of the reactor vessel.

To this end it is particularly preferred that the reactor vessel comprises at least one outlet hole, and wherein the hydrogen gas is pushed out of the outlet hole and into the outlet pipe, preferably by an overpressure inside the reactor vessel.

The gas removal arrangement can comprise a condenser for condensing compounds and/or compositions produced during the hydrogen production such as hydroxide vapours from entering the outlet pipe. Said condenser could be arranged in the reactor vessel, preferably in the upper part of the reactor vessel.

Additionally or alternatively, the gas removal arrangement can comprise at least one dryer being arranged in the outlet pipe and being configured to dry compounds and/or compositions produced during the hydrogen gas production such as hydroxide vapours that have entered the outlet pipe.

Additionally or alternatively, the gas removal arrangement can comprise or be in connection with at least one gas storage device being configured to store the hydrogen gas and/or at least one energy converter device being configured to convert the hydrogen gas into other forms of energy such as electrical energy and/or heat. For example, the energy converter device could be a fuel cell or a hydrogen boiler. However, many other energy storage devices and/or energy converter devices are likewise conceivable.

To this end it is particularly preferred that the hydrogen gas flows from the reactor vessel through the condenser and the dryer via the outlet pipe to the fuel cell or hydrogen boiler.

The gas removal arrangement can comprise further components such as at least one pressure regulating device that allows to regulate a pressure of the hydrogen gas in the outlet pipe.

It is preferred that water and/or an aqueous solution comprising compounds being generated during the hydrogen production such as metal hydroxide are returned as one or more reagents into the reactor vessel. In particular, and as mentioned earlier, the method is preferably configured to recirculate alkaline solutions and/or hydroxides such as sodium hydroxide being formed during the hydrogen gas generating reaction and to return said alkaline solutions and/or hydroxides into the reaction vessel for further hydrogen generating reactions. To this end it is particularly preferred that said recirculation or returning occurs via at least one recirculation arrangement. Said recirculation arrangement is preferably in connection with the one or more separation vessels and the reactor vessel such that compounds and/or compositions produced during the hydrogen production to be recirculated that were transferred from the reactor vessel into the separation vessel can be returned to the reactor vessel.

The at least one separation vessel is preferably configured to separate two or more compounds formed during the hydrogen production from one another and/or preferably comprises at least one separation device that allows for a separation of two or more such compounds from one another. For example, the separation vessel can be configured to separate solid compounds such as metal hydroxides, for instance aluminium hydroxides, from liquid compounds such as sodium hydroxide solutions. Said separation could occur via filtering or sedimentation or other means.

The recirculation arrangement is preferably in connection with the one or more separation vessels and the reactor vessel via at least one pipe or the like. It is furthermore preferred that said pipe comprises at least one return pump that is configured to pump the one or more compounds such as the sodium hydroxide from the separation vessel back into the reactor vessel. Various pumps are conceivable such as a compressed air pump. The recirculation arrangement can comprise further components such as at least one pressure regulating device that allows to regulate a pressure in the pipe and/or a control valve.

In another aspect, a production device for producing hydrogen gas as described above is provided. The production device comprises at least one reactor vessel for receiving the metal compound and water. The production device further comprises at least one dosing arrangement that is configured to supply one or more doses of the metal compound into the reactor vessel.

Any explanations made herein regarding the method of producing hydrogen gas preferably likewise apply to the production device for producing hydrogen gas and vice versa.

The production device preferably further comprises at least one feeding arrangement being configured to feed the metal compound to the dosing arrangement. Additionally or alternatively, the production device preferably further comprises one or more separation vessels being in fluid communication with the reactor vessel and being configured to separate one or more compounds and/or compositions produced during the hydrogen production from one another.

The production device preferably further comprises at least one gas removal arrangement being configured to remove hydrogen gas from the reactor vessel. Additionally or alternatively, the production device preferably further comprises at least one recirculation arrangement being configured to return one or more compounds and/or compositions

being produced during the hydrogen gas production into the reactor vessel.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows a schematic of a production device for producing hydrogen gas according to a method according to the invention;

Fig. 2 shows the $H_2$ evolution over time during Al-water reaction using 400 mg Al6060 cut wire: a) effect of temperature, and b) effect of NaOH molarity;

Fig. 3 shows $t_{20\%}$, $t_{50\%}$ and $t_{90\%}$ derived from Al-water reaction results using Al6060 cut wire: a) 3M NaOH solution at different temperatures, and b) different NaOH molarities at 60 °C;

Fig. 4 shows SEM images of cut wire and rounded Al6060 granules. a) Cut wire granule, b) porous surface in cut wire, c) non-porous surface in cut wire, c) rounded granule, e) non-porous irregular surface in the rounded granule;

Fig. 5 shows results for Al-water reaction for Al6060 cut wire and rounded granules (ca. 1.0 mm) at 65 °C, 2M NaOH; a) $H_2$ evolution as a function of time and b) reaction rate over time;

Fig. 6 shows Size dependency on Al-water reactions in 2M NaOH solution at 65 °C for Al6060 cut wire and rounded granules. Left: $H_2$ evolution for 0.6 mm (a), 0.8 mm (b), 1.0 mm (c) and 1.2 mm (d) granules. Right: t90% vs granule size (e).;

Fig. 7 shows reaction rates obtained at 65 °C and 2M NaOH for a) cut wire and b) rounded Al6060 granules of different sizes;

Fig. 8 shows digital microscopy images of cut wire (top) and rounded (bottom) Al6060 granules of 1.0 mm after reaction in 2M NaOH at 65 °C: a) before reaction, b) after 50% conversion, and c) after 90% conversion;

Fig. 9 shows SEM images of 1.0 mm granules samples at t50% showing porous interior in both cut wire (a) and round grain (c). Magnification into porous structure suggesting directional pores (b) and the presence of a secondary phase in the interior of the pores (d);

Fig. 10 shows a schematic representation of the dominating reaction models proposed at different stages of granule consumption for cut wire and rounded Al;

Fig. 11 shows the reaction results including the three repeating test runs for each granule type studied in the project.;

Fig. 12 shows a) Illustration of first-order reaction showing reaction rate is proportional to Al concentration (tested by adding 100 to 500 mg of Al granules in 50 mL NaOH 2M at 70°C. b) Derivation of A and $E_a$ values of the Arrhenius equation;

Fig. 13 shows a picture of materials used for evaluation of shape and size dependency in Al-water reactions: a) 1.2 mm, b) 1.0 mm, c) 0.8 mm, d) 0.6 mm. Cut wire granules are shown on top row and rounded granules in the bottom row;

Fig. 14 shows grain size distributions measured for commercial cut wire and rounded Al6060 granules of different sizes;

Fig. 15 shows SEM-EDX analysis of Al granule pore structure after 50% conversion in 2M NaOH solution at 65°C: a) Signal from the Al granule itself indicating composition of mainly Al, and b) signal from the solids precipitating inside the pores exhibiting contribution form Mg and Si impurities as well as O;

Fig. 16 shows digital microscopy images of cut wire (top) and rounded (bottom) granules of different sizes (0.6, 0.8, 1.0 and 1.2 mm) after reacted at t50% (65°C, 2M NaOH) The increasing hollowness for larger rounded granules indicate the stronger contribution from porous inside in the reaction mechanism;

Fig. 17 shows SEM microscopy images of rounded Al6060 grains at $t_{50\%}$ rection (65°C, 2M NaOH).: a) 1.0 mm and b) 1.2 mm.

DESCRIPTION OF PREFERRED EMBODIMENTS

Aspects of a production device for producing hydrogen gas according to the invention are now illustrated with reference to figure 1.

That is, figure 1, depicts a production device according to the invention, wherein said production device is configured to produce from a metal compound and water hydrogen gas and heat, wherein the metal compound is supplied in doses of grains.

The production device 1 comprises a reactor vessel 2, a feeding arrangement 3 being indicated by the dashed

lines in figure 1, and a dosing arrangement 4 being part of the feeding arrangement 3. The metal compounds are fed from a feedstock supply system 5 into the feeding arrangement 3 and via the feeding arrangement 3 into its dosing arrangement 4.

The feeding arrangement 3 and the dosing arrangement 4 comprises valve devices 6-8. In particular, the feeding arrangement 3 comprises two valves 6, 7, designated first valve 6 and second valve 7, being arranged in a linear manner, and the dosing arrangement 4 comprises one valve 8, designated third valve 8. The first valve 6 is in connection with the second valve 7, wherein the second valve 7 is furthermore in connection with the third valve 8, and wherein the third valve 8 is furthermore in connection with the reactor vessel 2.

These valves 6-8 are in connection with one another as well as with the reactor vessel 2 via a connection element 9 in the form of a tube and such, that the metal compound can be supplied into the connection element 9 connecting the second valve 7 and the third valve 8 while the first and second valves 6; 7 are at least temporarily both opened, and such, that after the metal compound is supplied into the connection element 9, at least the second valve 7 can be closed and the third valve 8 can be opened, whereby the at least one dose of the metal compound is supplied into the reactor vessel 2. In the depicted example, the dosing arrangement 4 is provided by the third valve 8.

Moreover, the connection element 9 is in connection with a purging device 10. The purging device 10 is in connection with valves 11; 12, and a tube 13 or the like that connects the purging device 10 with the connection element 9.

The reactor vessel 2 is in connection with a source of water (not shown) such that water can be supplied into the reactor vessel 2 and/or 22. The source of water is connected to the reactor vessel 2 and/or 22 via a pipe 14. Said pipe 14 is connected to a hole 15 at a side of the reactor vessel 2.

The hydrogen gas is removed from the reactor vessel via a gas removal arrangement 16 and in particular by an overpressure inside the reactor vessel 2. The gas removal arrangement 16 which comprises an outlet pipe17 for draining the hydrogen gas out of the reactor vessel 2. Said outlet pipe 16 is arranged in an upper part of the reactor vessel 2, and the reactor vessel 2 comprises an outlet hole through which the hydrogen gas is pushed out and into the outlet pipe 17.

The gas removal arrangement 16 further comprises a condenser 18 for condensing compounds and/or compositions produced during the hydrogen production and a dryer 19 being arranged in the outlet pipe 17 and being configured to dry compounds and/or compositions produced during the hydrogen gas production such as water vapours that have entered the outlet pipe 17. The gas removal arrangement 16 can comprise or be in connection with at least one gas storage device (not shown) being configured to store the hydrogen gas and/or at least one energy converter device being configured to convert the hydrogen gas into other forms of energy such as electrical energy or heat. The gas removal arrangement 16 further comprises a pressure regulating device 20 that allows to regulate a pressure of the hydrogen gas in the outlet pipe 17 and/or 29.

The reactor vessel 2 is furthermore in connection with a separation vessel 22 via a pipe 23 or the like. Compounds and/or compositions produced in the reactor vessel 2 during the production of the hydrogen gas can be transferred from the reactor vessel 2 into the separation vessel 22. In order to return regenerated aqueous solution as well as other compounds into the reactor vessel 2, the production device 1 comprises a recirculation arrangement 21 being in connection with the separation vessel 22 and the reactor vessel 2 such these compounds or compositions can be recirculated and can be returned to the reactor vessel 2.

The recirculation arrangement 21 is in connection with the separation vessel 22 and the reactor vessel 2 via a pipe 24. Said pipe 24 comprises a pump 25 that is configured to pump the compounds or compositions from the separation vessel 22 back into the reactor vessel 2. The recirculation arrangement 21 comprises further components such as a valve 26 that allows to drain solution from the bottom of vessel 22 to valve 27.

For illustrative purposes, an example of hydrogen production by means of the production device and method according to the invention is given in the following.

Grains of the metal compound such as aluminium grains are fed from the feedstock supply system 5 into the feeding arrangement 3 and subsequently are dosed into the reactor vessel 2 via the dosing arrangement 4.

Once the grains are in the reactor vessel 2 and contacted with water, an oxide layer of the aluminium that is present ab initio or formed by the reaction between the grains and water is removed by an alkaline solution such as a sodium hydroxide (or potassium hydroxide, acidic) solution, therefore aluminium reacts with water, producing hydrogen gas ($H_2$) and aluminium hydroxide ($Al(OH)_3$) and/or aluminium oxohydroxide. The hydrogen gas flows through the condenser 18 and the dryer 19 via the outlet pipe 17 to a gas storage, fuel cell or hydrogen boiler. The pressure in the reactor vessel 2 and/or pipe 29 can be adjusted with a pressure regulator 20 in the hydrogen gas outlet pipe 17. In the reactor vessel 2, during operation, the concentration of aluminium hydroxide in the solution will rise and a mix of sodium hydroxide solution with aluminium hydroxide is discharged via valve 28. The reacted aluminium hydroxide then enters the separation vessel 22. In the separation vessel 22, the solids are separated from the sodium hydroxide by means of a filtering, sedimentation or other. The sodium hydroxide can then be pumped back into the reactor vessel 2 with pump 25 and the recirculation arrangement 21. As already mentioned, water is consumed during the redox reaction. For this reason, water must be added to the production device 1 at regular intervals. The water is added via pipe 14 above the separation vessel 22 and can therefore be used additionally for rinsing a sieve or the like being arranged in the separation vessel 22 for

separation.

Seasonal energy storage represents a key solution to the fluctuation of renewable energy sources throughout the year. The use of Aluminum (Al) as energy storage material is promising due to the abundance of this element, its low cost, and high energy density. In summertime, when renewable electricity is abundant, it can be used to convert aluminium oxide to elementary aluminium; when the energy demand is high in winter season, Al can be oxidized by water releasing hydrogen and heat. Al6060 is an extensively utilized Al grade in various industries and its waste represents a cheap source for seasonal energy storage purposes. This work evaluates the use of commercially available Al6060 cut wire granules for the Al oxidation reaction in aqueous alkaline media. $H_2$ production at different temperature and alkalinities was tested and the results led to determine $E_a$, and to propose suitable conditions for performing Al-water reaction with Al6060. Different Al size and shapes derived from cut wire granules were also studied. Hence, $H_2$ production tests were combined with grain size distribution and microscopy analysis to determine the effect of morphology on granule depletion mechanism as well as on reaction rates. The results suggest that during the reaction, cut wire granules develop a directional porosity which accelerate reaction rates. The rates and exact depletion mechanism showed to depend strongly on granule size and shape. Such depletion mechanism, via pore formation, makes Al6060 cut wire granules a promising material for fast Al-water reactions.

As has been mentioned initially, in order to minimize the impact of global warming, fossil fuels need to be replaced by renewable energy sources such as hydropower, wind and solar energies. However, the production of renewable energy is highly seasonal and, in many countries, it does not align with highest energy demand periods. This scenario requires the development of efficient seasonal energy storage systems. A promising option is the use of aluminium (Al) as recyclable metal fuel [1], [2]. Aluminium is a non-hazardous and abundant element which can be oxidized by water to produce hydrogen ($H_2$) and heat. The $H_2$ produced can then be used as a fuel or it can be converted into electricity and heat in a fuel cell. The volumetric energy density of Al doubles the density of other energy carriers such as hydrogen, hydrocarbons, or mineral oils, making it particularly suitable for energy storage [3]. As proposed by Haller et al. the material cycle can be closed by reducing aluminium oxides obtained during $H_2$ production back to Al via a carbon free electrolysis process [3], [4], [5], [6]. In an example of the present invention, cut wire Al6060 type alloy has been evaluated as the source for $H_2$ and heat production as it is readily available and its high Mg content makes it prone to corrosive attack.

The reaction of Al in aqueous media (< 100 °C) leads to the formation $Al(OH)_3$ as a byproduct besides hydrogen (eq. 1).

$$2Al + 6H_2O_{(l)} \rightarrow 2Al(OH)_3 + 3H_2 \qquad \text{eq. 1}$$

The process is highly exothermic (DHr ~ 280 kJ/mol of $H_2$ at ~50-100 °C [7], [8]), and although it is thermodynamically favourable, the formation of an aluminium oxide layer inhibits the reaction as it prevents water from coming into direct contact with the metallic Al [9], [10], [11]. Many researchers have proposed methods for a continuous removal of the oxide layer to attain effective $H_2$ production. These methods include the use of hydroxide promoters, acid promoters, salt/oxide promoters, liquid metals or ultrasonics [9], [10], [11], [12], [13], [14], [15], [16]. Activation of Al precursor by mechanical treatments has been also exploited by ball milling techniques [10], [16], [17], [18], [19], [20], [21].

Faster reaction kinetics can also be achieved by alloying aluminium with different elements. The elements most studied comprise Ga, In, Sn, Bi, Mg and Si [22], [23], [24], [25] which are incorporated into the Al by ball milling or high temperature melting procedures. These elements permeate through aluminium grain boundaries, inhibiting passivation of the aluminium grain surfaces and the Al microstructure (i.e. grain size) has been reported to play a role on the impact of alloying. In a study by Meroueh et al. Mg-doped and $Mg_2Si$-doped Al were prepared by cold-rolling and annealing procedure to control grain size; reducing grains to 30 μm was observed to increase the $H_2$ production rate by an order of magnitude [26]

Previous research in our group devoted efforts to evaluate the implementation of some of these approaches to accelerate reaction for an "Alu-to-$H_2$" prototype and the use of alkaline solutions was identified as a practical option [5], [6]. The reaction of aluminium with sodium hydroxide solutions to produce hydrogen leads to sodium aluminate products in solution (eq. 2) [27].

$$2Al + 2NaOH + 6H_2O \rightarrow 2NaAl(OH)_4 + 3H_2 \qquad \text{eq. 2}$$

$$\downarrow$$

$$NaAl(OH)_4 \rightarrow NaOH + Al(OH)_3 \qquad \text{eq. 3}$$

The sodium hydroxide consumed is regenerated when Al(OH)3 precipitates (eq. 3). Therefore, the overall process is eq. 1 and only aluminium and water are the consumed raw materials to produce $H_2$ and $Al(OH)_3$.

The Al-water reaction rates in aqueous alkaline solutions are known to depend on reaction temperature and the

degree of alkalinity [11]. In case of the temperature, the reaction rate increases exponentially with the temperature as expressed by the Arrhenius equation. As for the alkalinity, several publications report faster kinetics with increasing alkalinity [27], [28] which is attributed to a more efficient oxide layer removal at higher pH. In addition to the operating conditions, the reaction kinetics strongly depend on the properties of the Aluminium used for reaction, such as its morphology (i.e. surface area) and the alloying elements present.

Grain-like shapes that can be densely packed for Al transportation and storage are a practical morphology for use as seasonal energy storage. Grains produced by free casting of molten metal or centrifugal atomization result in spherical, oval, or ill-shaped grains [29] while grains produced by extrusion, compression, and torsion techniques often come in a more regular shape [30]. The manufacturing process of commercial Al allows can lead to the formation of nanoscale metastable precipitate phases distributed throughout the Al matrix. The presence of these phases or grains can make the Al susceptible to intergranular and pitting corrosion which can potentially be beneficial for fast Al-water reaction. This is particularly the case for Mg containing Al alloys (i.e. Al6XXX and Al5XXX grades) in which the formation of β-phase $Mg_2Al_3$ in the grain boundaries sensitizes the material to corrosion [31], [32], [33], [34].

In the present invention, Al-water reactions were performed in NaOH solutions at different temperature and alkaline conditions to elucidate optimal conditions for operating an Alu-to-$H_2$ prototype. Commercial Al6060 grains were used as reactant due the high Mg content of this alloy; the grains used comprise cut wire cylinders produced by extrusion. The effect of Al morphology on reaction rate was evaluated by comparing the reactivity of cylindrical Al6060 cut wire grains of various sizes (0.6 to 1.2 mm). Spherical grains of equivalent sizes, obtained by mechanical treatment of the cut wires, were also tested. The results and discussion bring valuable insight into optimal reaction condition as well as the required properties Al grains to guarantee a fast reaction.

*Materials and methods*

*Materials*

Temperature and alkalinity studies were performed using Al6060 grade cut wire grains (∅ ca. 1.0 mm) purchased from Krampe Harex (DE)/Carlo Bernasconi AG (CH). They consist of cylindrical grains obtained by cutting of extruded wires.

For grain morphology studies, two types of Al6060 grains were purchased from Kuhmichel (DE). One of the morphologies consisted of the cylindrical cut wire, and the other comprised spherical grains obtained by mechanical treatment of the cut wires for compacting them into smooth spherical grains. For each morphology, 0.6, 0.8, 1.0 and 1.2 mm diameter grains were purchased.

The Al6060 alloy composition - specified by the suppliers - comprised 97.9-99.3% Al, 0.35-0.6% Mg, 0.3-0.6% Si, 0.1-0.3% Fe, 0.15% Zn, and < 0.1% Cr, Cu, Mn and Ti.

*Al-water reaction setup*

The Al-water reaction rate tests were performed in a closed setup comprising a three-neck round-bottomed flask fitted with a magnetic stirrer. The temperature in the flask was controlled by a heated water bath with a thermocouple for bath temperature control. The reading of this thermocouple was taken as reaction temperature. Loss of solution due to evaporation was minimized by the use of a dimroth condenser. ANKOMRF Gas Production System pressure sensor was mounted on top of the condenser via a custom-made glass adapter. All connections were sealed with silicon sealing paste to prevent gas leakages during experiments. Schematics of the setup are given in the supplementary information For the tests, 50 mL NaOH solution (Sigma-Aldrich, > 97%) were preheated to the desired temperature. Then, Al was dosed through one of the side necks and the system was closed immediately. The mixture was kept under vigorous stirring during reaction to ensure homogeneous temperature and product concentration in the flask. Pressure increase due to the $H_2$ produced as well as gas temperature were recorded by the Ankom sensor. The reading was used to quantify the evolution of $H_2$ production by the ideal gas equation. Where P is the pressure (atm), T is the temperature (K), R is the universal gas constant (0.0821 $atm \cdot L \cdot mol^{-1} \cdot K^{-1}$) and V is the volume of the reactor excluding the added solution (0.658 L).

In order to ensure system reproducibility, the tests performed with different grain morphologies were performed three times. The data shown here represent the average of the three tests. The standard deviations obtained ranged between 0.000431 mol (2.2%) to 0.000215 mol (1.1%). The individual tests are shown in (Fig. 11.

*Material characterisation*

X-ray diffraction: the crystal phases present in the reaction products were identified by X-Ray Diffraction (XRD) using a Bruker D2 Phaser diffractometer. The measurements were performed using Cu Kα radiation source (λ = 1.5406 Å) with a voltage of 40 kV, and a current of 30 mA. Approximately 0.5 g of grains were loaded into sample holders, the samples

were then flattened using a glass microscope cover slip to give a flat and homogenous surface and height. The patterns obtained were compared to a reference library (inorganic crystal structure database, ICSD) to identify the crystal phases. The data was analysed using the Diffract.EVA software. Microscopy: images were taken to evaluate morphological analysis of Al grains at different times of reaction. The general morphology was observed in a Leica DVM 6 M digital microscope. Selected samples were evaluated in a JSM IT200 Scanning electron microscope (SEM) to obtain high magnification images of Al grain surfaces; the instrument was fitted with an energy dispersive X-ray detector (XRD) for surface elemental analysis. Camsizer X2 (Retsch Technologies) was used to determine the Al6060 grain size distribution. For the measurements, ca. 1 g of grains were placed in the sample holder and the grains were dispersed in air flow through a Venturi nozzle (dispersion pressure was set at 95 kPa) before reaching the measurement field to avoid agglomerations. During measurement, the dispersed grain stream passes through two LED stroboscopic light waves, with the shadow projections of the grains being recorded by two digital cameras.

*Results and discussion*

*Effect of temperature and NaOH molarity*

In case of temperature, higher temperatures typically accelerate chemical reactions. To evaluate this effect in Al-water reactions, tests were performed by adding 400 mg of Al6060 cut wire grains (∅ = 1.0 mm) in a 3M NaOH solution at temperatures between 50 to 80 °C. As shown in Fig. 2a, faster conversions are obtained at higher temperatures: while about 46 min were needed to complete the reaction at 50 °C only 14 min were required at 80 °C. Note that from the reaction stoichiometry a total of 0.022 mols of $H_2$ per 400 mg of Al were expected and the tests lead to detection of 0.019 mol Hz. As the values were repeatable among the several studies the presence of leaks was excluded; the deviation is attributed to the fact that the Ankom sensor periodically vents small amounts of $H_2$ to avoid overpressure in the glass ware for safety reasons. This also results in periodic steps in the curves, such steps are visible in the plots presented in Fig. 11.

The reaction between Al and water is considered a first-order reaction dependent on the Al concentration as given in eq. 4.

$$r = k[Al] \qquad \text{eq. 4}$$

where r is the reaction rate (mol·$L^{-1}$·$s^{-1}$), K is a reaction constant ($s^{-1}$), [Al] is the Al concentration available for reaction (mol·L-1) and n is the reaction order, in this case 1. The first-order was verified by performing tests with varying amount of Al grains (from 100 to 500 mg), which led to a linear correlation between $H_2$ production rates and the Al concentration (Fig. 12a).

The relationship between temperature and the rate constant (K) is quantitatively described by the Arrhenius equation (eq. 5), which states that K, and therefore the reaction rate, increases exponentially with temperature.

$$K = Ae^{-\frac{Ea}{RT}} \qquad \text{eq. 5}$$

Where A is a pre-exponential factor related to the frequency of correctly oriented collisions between reactants ($s^{-1}$), e is the base of the natural logarithm (Euler's number, 2.71828), $E_a$ is the activation energy (J.$mol^{-1}$), R is the universal gas constant (8.3145 J.$mol^{-1}$·$K^{-1}$) and T is the absolute reaction temperature (K).

In order to calculate the $E_a$, K values for each temperature were derived by dividing the reaction rate by the Al amount remaining at 50% conversion (Table 1, Fig. 12a). Plotting ln(K) vs 1/T a linear correlation is obtained where $E_a$ and A can be derived from the slope and intercept, respectively (Fig. 12b). The $E_a$ and A derived from the linear fit as well as the $R^2$ values are given in Table 1. The $E_a$ determined was 42.54 kJ/mol, which is within the range of values found in other studies (i.e. 24-80 kJ/mol) [28], [35], [36], [37].

Table 1. $t_{20\%}$, $t_{50\%}$ and $t_{90\%}$ values obtained during reaction of 400 mg of Al6060 cut wire at various temperatures and NaOH molarities. The table also includes the $E_a$ and A parameters derived from fitting the data to Arrhenius equation, as well as the goodness of fit.

| | Temperature (°C) | Molarity (M) | $t_{20\%}$ (min) | $t_{50\%}$ (min) | $t_{90\%}$ (min) | K ($s^{-1}$) |
|---|---|---|---|---|---|---|
| Temperature | 50 | 3 | 8.0 | 17.1 | 33.2 | 0.00096 |
| | 60 | | 4.9 | 11.1 | 21.2 | 0.00158 |
| | 65 | | 4.0 | 8.3 | 16.2 | 0.00200 |
| | 70 | | 2.8 | 6.7 | 12.7 | 0.00258 |
| | 75 | | 2.5 | 5.3 | 10.2 | 0.00311 |
| | 80 | | 2.2 | 4.4 | 9.1 | 0.00360 |
| NaOH molarity | 60 | 1 | 4.4 | 18.8 | 36.4 | - |
| | | 1.5 | 5.0 | 14.9 | 28.7 | - |
| | | 2 | 5.5 | 12.2 | 23.9 | - |
| | | 3 | 6.9 | 10.6 | 20.3 | - |
| | | 6 | 8.1 | 9.4 | 18.3 | - |
| Arrhenius fit | $E_a$ (J·$mol^{-1}$) | | 42538.4 | | | |
| | A ($s^{-1}$) | | 8.907 | | | |
| | $R^2$ | | 0.996 | | | |

Regarding alkalinity, increasing pH of solutions is known to accelerate the Al-water reaction due to a more efficient removal of the protective $Al_2O3$ layer. This effect was investigated for Al6060 grains at 60 °C using NaOH solutions of 1M, 1.5M, 2M, 3M and 6M. As shown in Fig. 2b, the $H_2$ evolution trends obtained evidenced a significant increase of the reaction rate with NaOH molarity. The reaction time at 90% conversion for example was ca. 36 min in 1M solution while in 6M solution it was only 18 min.

The dependency of the Al-water reaction rate on temperature and alkalinity can be better visualized in Fig. 3 where the reaction times obtained at 20%, 50% and 90% conversion - denoted as $t_{20\%}$, $t_{50\%}$ and $t_{90\%}$ respectively - are plotted as function of temperature or NaOH molarity. The plot (tabulated data in Table 1) illustrates an exponential decrease of reaction time with NaOH molarity and temperature; the reaction rates decrease sharply from 1 to 2M NaOH and more gradually > 2M NaOH. The obtained exponential trends imply that reaction rates improve sharply at milder range of conditions (from 1 to 2M NaOH or from 50 to 70 °C) but rate improvement becomes gradual > 2M NaOH and > 70 °C. Hence, the later values are proposed as boundary conditions for Al-water reactions using Al6060 grains.

*Effect of Al grain morphology*

*Effect of grain shape*

Reaction kinetics between a solid and a fluid strongly depends on the surface area of the solid [38] and hence on its morphology that is a result of the grain production method. In order to study the effect of grain morphology, Al6060 cut wire grains were compared to rounded ones of equivalent size (∅ = 1.0 mm). The rounded Al grains were provided by the same supplier (Kuhmichel) and are manufactured by mechanical treatment of the cut wires. SEM images of the unreacted grains show different surface topology for both types of grains (Fig. 4). Cut wire cylinders exhibit a rough or porous-like base (Fig. 4b), as well as non-porous curved surface (Fig 4c). Rounded grains on the other hand exhibit exclusively non-porous irregular outer surface (Fig 4e).

For non-porous materials, solid-liquid reaction rates can be described by the shrinking core model in which the reaction occurs exclusively at the outer surface. The diameter of the grain decreases homogeneously as it gets consumed during reaction, which leads to a decrease in available surface and therefore the reaction rates decrease over time. For porous solids, the kinetics are described by the random pore model. Here, the reaction also takes place in the inner pore system [38], [39] and as the surface area associated with pores increases during reaction as the pores become deeper which increases reaction rates [40].

The Al-water reactions using different grain morphologies were performed at 2M NAOH and at 65 °C (Fig. 5 and Table 2). Consistent with the surface morphologies observed by SEM, the cut wire reacts faster ($t_{50\%}$ = 7.6 and $t_{90\%}$ =16.2 min) than the rounded grains ($t_{50\%}$ = 10.2 and t90% = 20.6 min). Besides, unlike the rounded grains, the cut wire exhibits a reaction rate increase as expected from porous materials (Fig. 5b); hence the rate increased to 0.0015 mol/min in the first 7 min before decreasing to 0 mol/min.

*Effect of grain size*

Smaller grains - with higher surface to bulk ratio - lead to faster conversion; larger grains with low surface to bulk ratios will result in slower reactions. In the case of cut wires however, the surface provided by the porous structure is expected to partially mitigate such size dependency. For a close evaluation of Al size effect, grains with custom-made diameter of 0.6, 0.8, 1.0 and 1.2 mm were purchased for both, cut wire and rounded morphologies. The picture of the grains and the grain size distribution measured is given in Fig. 13 and Fig. 14. The figures point out a narrow size distribution and a well resolved grain sizes which ensures an accurate size-activity dependency evaluation. Regarding Al-water reactions, $H_2$ evolution from tests performed in 2M NaOH and 65 °C is plotted in Fig. 6a-d. For a better visualization of the size effect Fig. 6e displays the $t_{90\%}$ values as function of grain size.

Table 2. $t_{50\%}$ and $t_{90\%}$ values obtained during reaction of 400 mg of Al6060 cut wire or rounded grains (65 °C and 2M NaOH) of different sizes.

| | Diameter (mm) | $t_{50\%}$ (min) | $t_{90\%}$ (min) |
|---|---|---|---|
| Cut Wire | 0.6 | - | 12.4 |
| | 0.8 | - | 14.2 |
| | 1.0 | 7.6 | 16.2 |
| | 1.2 | - | 20.1 |
| Roun ded | 0.6 | - | 13.6 |
| | 0.8 | - | 15.8 |
| | 1.0 | 10.2 | 20.6 |
| | 1.2 | - | 20.9 |

If we attend to $t_{90\%}$ values (Fig. 6e, Table 2), the 0.6 mm exhibit values of 12.4 and 13.6 min for cut wire and rounded respectively. For larger Al grain sizes, the corresponding reaction time increases. Up to 1.0 mm grains, the reaction time increase is more severe for the rounded grains ($t_{90\%}$ = 20.6 min) than for the cut wire ($t_{90\%}$ = 16.2 min). This is expected considering the porous nature of the cut wires. Nevertheless, for the 1.2 mm grains the $t_{90\%}$ values for both morphologies converged into similar values (20.1 and 20.9 min) and the reaction profiles look in fact comparable (Fig. 6d).

The reaction rates in Fig. 7 also show somehow unexpected trends. The rate profiles in the cut wire samples (Fig. 7a) are in accordance with those of porous materials, and in all cases the reaction rate increased during the first 5-10 min of reaction. For the rounded grains (Fig. 7b), the rate profiles exhibit a more continuous rate decrease typical of non-porous solids. Note however, that these profiles flatten in the first half of the reaction (5-10 min); this observation, which is more pronounced in larger rounded grains suggest a complex depletion reaction mechanism.

In order to understand the 1.2 mm reaction time convergence and the trends observed in reaction rates, grains recovered at 50 and 90% conversion (2M NaOH solution 65 °C) were evaluated by microscopy together with unreacted samples. The digital microscope images for 1.0 mm grains are shown in Fig. 8 and reveal a rather complex grain depletion sequence. In the case of the cut wire, the wedge-shaped porous surface is seen to consume first via the faster random pore mechanism. This leads to a hole in the centre of the grain and only the non-porous outer shell is left at 90% conversion, resulting in a ring-shaped grain. We propose that beyond this point the shrinking core mechanism dominates.

In case of the rounded grain, a hole appears after 50% conversion, resulting in a partially hollow and round grain. At 90% conversion, the inside of the grain has seen to have consumed preferentially, leading to a ring-shaped grain in a similar fashion as the cut wire that was not rounded.

These images suggest that the inside of the rounded grains - manufactured by mechanical treatment of cut wires - possibly remains porous even after the mechanical treatment. And while the reaction commences as shrinking core, the

mechanism changes to random pore once the porous interior gets exposed.

SEM images of 1.0 mm grains recovered at t50% verify this hypothesis. Fig. 9a shows a highly porous surface in the wedge-shaped face of the cut wire. The higher magnification image of the pores in Fig. 9b reveals that the pores are deep in nature and well oriented, probably in the direction of extrusion during cut wire manufacturing process. In case of the rounded grain in Fig. 9c, most of the surface remains smooth at $t_{50\%}$ but a clearly porous area is also observed; this porous surface - absent in unreacted rounded grains (Fig. 4e) - belongs to the inner core which emerged as a result of outer shell consumption during reaction. Note that a secondary phase is observed accumulating in the walls of the pores (Fig. 9d). SEM-EDX analysis included in the supporting information (Fig. 15) suggest that such secondary phase is composed of Mg and Si. These comprise the impurities in Al6060 which precipitate in the form of oxides within the pores as the grains get consumed.

The change in mechanism from shrinking core to random pore in rounded grains will be more significant for larger grains with larger inner volume, explaining the higher reaction rate in 1.2 mm round grains, described by the random pore model. Further microscopy images for 0.6-1.2 mm granules at $t_{50\%}$ showing the porous centre in rounded sample can be found in the appendix (Fig. 16 and Fig. 17). The proposed grain depletion mechanisms and the models dominating in the course of Al-water reaction in round and cut wires are shown in Fig. 10.

*Concussions*

Al-water reactions were performed using Al6060 grains to evaluate the effect of temperature and alkalinity, as well as the effect of grain morphology. The results showed an exponential response of the reaction rate with the temperature and alkalinity and the activation energy $E_a$ of Al6060 grains was determined to be 42.54 kJ/mol. The data collected allowed to propose temperatures and NaOH molarities up to 70 °C and 2M as suitable conditions for a fast reaction because less significant rate acceleration was observed at harsher conditions.

The reaction results, supported by microscopy studies, reveal that cut wire grains develop directional porosity during the Al-water reaction. This grain depletion mechanism can be tentatively attributed to the presence of directional grain structure and boundaries (resulting from the extrusion process during granule manufacturing), along with the presence of alloying elements (e.g., Mg). Derivation into a porous structure during reaction, and the acceleration of reaction rates associated to it, makes Al6060 cut wire a promising material for Al-water reactions. Hence, the use of pressure and temperature treatments in Al alloys can be specifically designed to favour material corrosion into high surface area porous system which enhance Al-water reaction rates.

Regarding grain size and shape, different reaction profiles were obtained for cut wire vs rounded grains of 1.0 mm. Microscopy studies showed that the manufacturing process of these two grains results in complex morphologies which leads to overlapping grain depletion mechanisms (i.e. porous vs core shell). The data suggest that the grain size may determine which mechanism predominates in the overall reaction rate. Hence, not only the morphology but also the grain size should be taken into account when choosing suitable materials for fast reaction kinetics.

*References*

[1] J. M. Bergthorson, "Recyclable metal fuels for clean and compact zero-carbon power," Progress in Energy and Combustion Science, vol. 68. Elsevier Ltd, pp. 169-196, Sep. 01, 2018. doi: 10.1016/j.pecs.2018.05.001.

[2] K. A. Trowell, S. Goroshin, D. L. Frost, and J. M. Bergthorson, "Aluminum and its role as a recyclable, sustainable carrier of renewable energy," Appl Energy, vol. 275, Oct. 2020, doi: 10.1016/j.apenergy.2020.115112.

[3] M. Y. Haller, D. Carbonell, M. Dudita, D. Zenhausern, and A. Häberle, "Seasonal energy storage in aluminium for 100 percent solar heat and electricity supply," Energy Conversion and Management: X, vol. 5, Jan. 2020, doi: 10.1016/j.ecmx.2019.100017.

[4] M. Haller, D. Amstad, M. Dudita, D. Carbonell, and D. Zenhäusern, "Hybrid Seasonal Storage of Renewable Heat and Electricity with an Aluminium Redox Cycle," 2021. doi: DOI: 10.5281/zenodo.6327100.

[5] M. Y. Haller, D. Amstad, M. Dudita, A. Englert, and A. Häberle, "Combined heat and power production based on renewable aluminium-water reaction," Renew Energy, vol. 174, pp. 879-893, Aug. 2021, doi: 10.1016/j.renene.2021.04.104.

[6] "AlEnCycles Aluminium-Redox-Cycles for the Production of Heat and Electricity for Buildings based on Renewable Energies 3O 2 4Al Electricity 12 Heat 4 Smelter with inert anodes," 2020. [Online]. Available: www.sorec.ch

[7] M. Su, H. Hu, J. Gan, W. Ye, W. Zhang, and H. Wang, "Thermodynamics, kinetics and reaction mechanism of hydrogen production from a novel Al alloy/NaCl/C3N4 composite by low temperature hydrolysis," Energy, vol. 218, Mar. 2021, doi: 10.1016/j.energy.2020.119489.

[8] J. Petrovic and G. Thomas, "Reaction of aluminum with water to produce hydrogen," U.S. Department of Energy,

pp. 1-26, 2008.

[9] L. Ouyang et al., "Recent progress on hydrogen generation from the hydrolysis of light metals and hydrides," J Alloys Compd, vol. 910, Jul. 2022, doi: 10.1016/j.jallcom.2022.164831.

[10] A. Bolt, I. Dincer, and M. Agelin-Chaab, "A review of unique aluminum-water based hydrogen production options," Energy and Fuels, vol. 35, no. 2. American Chemical Society, pp. 1024-1040, Jan. 21, 2021. doi: 10.1021/acs.energyfuels.0c03674.

[11] H. Z. Wang, D. Y. C. Leung, M. K. H. Leung, and M. Ni, "A review on hydrogen production using aluminum and aluminum alloys," Renewable and Sustainable Energy Reviews, vol. 13, no. 4. pp. 845-853, May 2009. doi: 10.1016/j.rser.2008.02.009.

[12] L. Escobar-Alarcón, J. L. Iturbe-Garcia, F. Gonzalez-Zavala, D. A. Solis-Casados, R. Perez-Hernández, and E. Haro-Poniatowski, "Hydrogen production by ultrasound assisted liquid laser ablation of Al, Mg and Al-Mg alloys in water," Appl Surf Sci, vol. 478, pp. 189-196, Jun. 2019, doi: 10.1016/j.apsusc.2019.01.213.

[13] S. Xu, X. Zhao, and J. Liu, "Liquid metal activated aluminum-water reaction for direct hydrogen generation at room temperature," Renewable and Sustainable Energy Reviews, vol. 92. Elsevier Ltd, pp. 17-37, Sep. 01, 2018. doi: 10.1016/j.rser.2018.04.052.

[14] W. Z. Gai, S. Tian, M. H. Liu, X. Zhang, and Z. Y. Deng, "Synergistic effect and mechanisms of ultrasound and AlOOH suspension on Al hydrolysis for hydrogen production," Ultrason Sonochem, vol. 90, Nov. 2022, doi: 10.1016/j.ultsonch.2022.106189.

[15] D. Kumar and K. Muthukumar, "An overview on activation of aluminium-water reaction for enhanced hydrogen production," J Alloys Compd, vol. 835, Sep. 2020, doi: 10.1016/j.jallcom.2020.155189.

[16] P. Dupiano, D. Stamatis, and E. L. Dreizin, "Hydrogen production by reacting water with mechanically milled composite aluminum-metal oxide powders," Int J Hydrogen Energy, vol. 36, no. 8, pp. 4781-4791, Apr. 2011, doi: 10.1016/j.ijhydene.2011.01.062.

[17] M. Q. Fan, F. Xu, and L. X. Sun, "Studies on hydrogen generation characteristics of hydrolysis of the ball milling Al-based materials in pure water," Int J Hydrogen Energy, vol. 32, no. 14, pp. 2809-2815, Sep. 2007, doi: 10.1016/j.ijhydene.2006.12.020.

[18] Y. Liu et al., "Study on hydrogen generation from the hydrolysis of a ball milled aluminum/calcium hydride composite," RSC Adv, vol. 5, no. 74, pp. 60460-60466, 2015, doi: 10.1039/c5ra09200k.

[19] C. Y. Ho and C. H. Huang, "Enhancement of hydrogen generation using waste aluminum cans hydrolysis in low alkaline de-ionized water," Int J Hydrogen Energy, vol. 41, no. 6, pp. 3741-3747, Feb. 2016, doi: 10.1016/j.ijhydene.2015.11.083.

[20] S. S. Razavi-Tousi and J. A. Szpunar, "Role of Ball Milling of Aluminum Powders in Promotion of Aluminum-Water Reaction to Generate Hydrogen," Metallurgical and Materials Transactions E, vol. 1, no. 3, pp. 247-256, Sep. 2014, doi: 10.1007/s40553-014-0024-7.

[21] S. S. Razavi-Tousi and J. A. Szpunar, "Effect of structural evolution of aluminum powder during ball milling on hydrogen generation in aluminum-water reaction," Int J Hydrogen Energy, vol. 38, no. 2, pp. 795-806, Jan. 2013, doi: 10.1016/j.ijhydene.2012.10.106.

[22] S. P. du Preez and D. G. Bessarabov, "Hydrogen generation by the hydrolysis of mechanochemically activated aluminum-tin-indium composites in pure water," Int J Hydrogen Energy, pp. 21398-21413, Nov. 2018, doi: 10.1016/j.ijhydene.2018.09.133.

[23] H. Wang, J. Lu, S. J. Dong, Y. Chang, Y. G. Fu, and P. Luo, "Preparation and hydrolysis of aluminum based composites for hydrogen production in pure water," Mater Trans, vol. 55, no. 6, pp. 892-898, 2014, doi: 10.2320/matertrans.M2013425.

[24] T. He, W. Wang, W. Chen, D. Chen, and K. Yang, "Reactivity of Al-rich Alloys with Water Promoted by Liquid Al Grain Boundary Phases," J Mater Sci Technol, vol. 33, no. 4, pp. 397-403, Apr. 2017, doi: 10.1016/j.jmst.2016.11.013.

[25] Q. An et al., "Effects of Bi composition on microstructure and Al-water reactivity of Al-rich alloys with low-In," Int J Hydrogen Energy, vol. 43, no. 24, pp. 10887-10895, Jun. 2018, doi: 10.1016/j.ijhydene.2018.05.009.

[26] L. Meroueh, L. Neil, T. W. Eagar, and D. P. Hart, "Leveraging Grain Size Effects on Hydrogen Generated via Doped Aluminum-Water Reactions Enabled by a Liquid Metal," ACS Appl Energy Mater, vol. 4, no. 1, pp. 275-285, Jan. 2021, doi: 10.1021/acsaem.0c02175.

[27] D. Beltiskus, "Reaction of aluminum with sodium hydroxide solution as a source of hydrogen," Electrochem. Soc., vol. 117, no. 8, pp. 1097-1099, 1970.

[28] Y. A. Aleksandrov, E. I. Tsyganova, and A. L. Pisarev, "Reaction of aluminum with dilute aqueous NaOH solutions," Russ J Gen Chem, vol. 73, no. 5, pp. 729-734, 2003.

[29] V. G. Gopienko, V. P. Kiselev, and N. S. Zobnina, "Methods of manufacture of Al powders and their fields of application," Poroshkovaya Metallurgiya, no. 12, pp. 926-930, 1984.

[30] B. Wan, W. Chen, T. Lu, F. Liu, Z. Jiang, and M. Mao, "Review of solid state recycling of aluminum chips," Resources, Conservation and Recycling, vol. 125. Elsevier B.V., pp. 37-47, 2017. doi: 10.1016/j.resconrec.2017.06.004.

[31] G. Yi, A. T. Derrick, Y. Zhu, and M. L. Free, "A Collector Plate Mechanism-Based Classical Intergranular Precipitation Model for Al Alloys Sensitized at Different Temperatures," Metall Mater Trans A Phys Metall Mater Sci, vol. 46, no. 11, pp. 5393-5406, Nov. 2015, doi: 10.1007/s 11661-015-3110-2.

[32] J. L. Searles, P. I. Gouma, and R. G. Buchheit, "Stress Corrosion Cracking of Sensitized AA5083 (Al-4.5Mg-1.0Mn)."

[33] D. Nickel, D. Dietrich, T. Mehner, P. Frint, D. Spieler, and T. Lampke, "Effect of strain localization on pitting corrosion of an AlMgSi0.5 alloy," Metals (Basel), vol. 5, no. 1, pp. 172-191, Feb. 2015, doi: 10.3390/met5010172.

[34] J. K. Brosi, S. M. Seifi, and J. J. Lewandowski, "Delamination of sensitized Al-Mg alloy during fatigue crack growth in room temperature air," in Metallurgical and Materials Transactions A: Physical Metallurgy and Materials Science, Nov. 2012, pp. 3952-3956. doi: 10.1007/s11661-012-1361-8.

[35] A. Mezulis et al., "Studies on water-aluminum scrap reaction kinetics in two steps and the efficiency of green hydrogen production," Energies (Basel), vol. 16, no. 14, Jul. 2023, doi: 10.3390/en16145554.

[36] V. N. Alviani et al., "Mechanisms and possible applications of the Al-H2O reaction under extreme pH and low hydrothermal temperatures," Int J Hydrogen Energy, vol. 44, no. 57, pp. 29903-29921, Nov. 2019, doi: 10.1016/j.ijhydene.2019.09.152.

[37] A. A. El-Awady, B. A. Abd-El-Nabey, and S. G. Aziz, "Thermodynamic and kinetic factors in chloride ion pitting of aluminium metal corrosion," vol. 89, no. 5, pp. 795-802, 1993.

[38] L. Dong, I. Mazzarino, and A. Alexiadis, "Development of solid-fluid reaction models-a literature review," ChemEngineering, vol. 5, no. 3, Sep. 2021, doi: 10.3390/chemengineering5030036.

[39] S. K. Bhatia and D. 0 Perlmutter, "A random pore model for fluid-solid reactions," AIChE Journal, vol. 26, no. 3, pp. 379-386, 1980.

[40] G. Grasa, R. Murillo, M. Alonso, and J. C. Abanades, "Application of the random pore model to the carbonation cyclic reaction," AIChE Journal, vol. 55, no. 5, pp. 1246-1255, May 2009, doi: 10.1002/aic. 11746.

LIST OF REFERENCE SIGNS

| | |
|---|---|
| 1 | production device |
| 2 | reactor vessel |
| 3 | feeding arrangement |
| 4 | dosing arrangement |
| 5 | feedstock supply system |
| 6 | valve |
| 7 | valve |
| 8 | valve |
| 9 | tube |
| 10 | purging device |
| 11 | valve |
| 12 | valve |
| 13 | tube |
| 14 | pipe |
| 15 | hole |
| 16 | gas removal arrangement |
| 17 | outlet pipe |
| 18 | condenser |
| 19 | dryer |
| 20 | pressure regulating device |
| 21 | recirculation arrangement |
| 22 | separation vessel |
| 23 | pipe |
| 24 | pipe |
| 25 | pump |
| 26 | pressure regulating device |
| 27 | control valve |
| 28 | pinch valve |
| 29 | gas outlet |

## Claims

1. A method of producing hydrogen gas comprising the steps of:

   - contacting at least one metal compound with water in a reactor vessel (2) to generate hydrogen gas,

   **characterized in that** the at least one metal compound is provided as grains that have a grain size of at least 0.2 millimeter, preferably of at least 0.5 millimeter.

2. The method according to claim 1, wherein the metal compound is not powdery and/or not pelletized.

3. The method according to any one of the preceding claims, wherein the metal compound has a spherical shape, an oval shape, or an ill shape, and/or
   wherein the metal compound has a flat surface or an uneven surface.

4. The method according to any one of the preceding claims, wherein the metal compound is a metal alloy, and

   wherein the primary metal preferably is aluminium, iron or silicon, and/or
   wherein at least one alloying element preferably is selected from the group of Al, Fe, Si, Cu, Mn, Mg, Li, Ca, Co, Zn and mixtures thereof.

5. The method according to any one of the preceding claims, wherein the metal compound, before being contacted with water in the reactor vessel (2), is subjected to mechanical stress, and

   wherein said mechanical stress corresponds to at least one of pulling or crushing the metal compound, and/or
   wherein said mechanical stress induces directional boundary structures in the metal lattice of the metal compound.

6. The method according to any one of the preceding claims, wherein one or more doses of the metal compound are supplied into the reactor vessel (2) via at least one dosing arrangement (4), and/or

   wherein the metal compound is supplied into the reactor vessel (2) in solid form, and/or
   wherein the metal compound is supplied from at least one feeding arrangement (3) comprising the metal compound.

7. The method according to any one of the preceding claims, wherein the reactor vessel (2), in particular via the feeding arrangement (3) and/or the dosing arrangement (4), is closed towards an outside, in an air-tight manner, and/or wherein a pressure in the reactor vessel (2) is above ambient pressure, the pressure preferably being 0.5 barg or more.

8. The method according to any one of the preceding claims, wherein the metal compound in the reactor vessel (2) is kept in motion by at least one of: buoyancy of the hydrogen gas, thermal convection, forced gas-bubbling, by a flow of one or more liquid compounds and/or compositions within the reaction vessel, or by at least one stirring device being arranged within the reaction vessel (2).

9. The method according to any one of the preceding claims, wherein the metal compound is contacted with water in the reactor vessel (2) at a temperature being below or at the boiling point of an aqueous solution being present in the reactor vessel (2).

10. The method according to any one of the preceding claims, wherein the metal compound is contacted with water in the reactor vessel (2) at an alkaline pH-value and/or at a pH value being 8 or more, and/or

    wherein at least one agent capable of removing a metal oxide layer being formed during the hydrogen gas generation is supplied into the reactor vessel (2), and/or
    wherein at least one of an oxide promoter, a salt promoter, a hydroxide promoter, a molten metal alloy, an alkaline agent, or combinations thereof are supplied preferably in solution into the reactor vessel (2).

11. The method according to any one of the preceding claims, wherein metal hydroxide and/or metal oxohydroxide is

formed during the generation of the hydrogen gas in the reactor vessel (2), and

i) wherein a concentration of the metal compound in the reactor vessel (2) is close to or above a saturation level of the forming metal hydroxide and/or metal oxohydroxide in the reactor vessel (2), and the metal hydroxide and/or oxohydroxide being precipitated in the reactor vessel (2) or in at least one separation vessel (22) being in fluid communication with the reactor vessel (2), or
ii) wherein a concentration of the metal compound in the reactor vessel (2) is below a level of spontaneously forming metal hydroxide and/or metal oxohydroxide in the reactor vessel (2), and the metal hydroxide and/or oxohydroxide being precipitated in at least one separation vessel (22) being in fluid communication with the reactor vessel (2) preferably after reducing a temperature in the separation vessel (22).

**12.** The method according to any one of the preceding claims, wherein the hydrogen gas is removed from the reactor vessel (2) via at least one gas removal arrangement (16) and in particular by an overpressure inside the reactor vessel (2), and/or
wherein water and/or an aqueous solution comprising one or more compounds and/or compositions formed during the hydrogen gas production such as metal hydroxide are returned as one or more reagents into the reactor vessel (2).

**13.** A production device (1) for producing hydrogen gas according to a method as claimed in any one of the preceding claims,

wherein the production device (1) comprises at least one reactor vessel (2) for receiving the metal compound and water,
**characterized in that** the production device (1) further comprises at least one dosing arrangement (4) that is configured to supply one or more doses of the metal compound into the reactor vessel (2).

**14.** The production device (1) as claimed in claim 13, further comprising:

- at least one feeding arrangement (3) being configured to feed the metal compound to the dosing arrangement (4), and/or
- one or more separation vessels (22) being in fluid communication with the reactor vessel (2) and being configured to separate one or more compounds and/or compositions produced during the hydrogen production from one another.

**15.** The production device (1) as claimed in claim 13 or 14, further comprising:

- at least one gas removal arrangement (16) being configured to remove hydrogen gas from the reactor vessel (2), and/or
- at least one recirculation arrangement (21) being configured to return one or more compounds and/or compositions being produced during the hydrogen gas production into the reactor vessel (2).

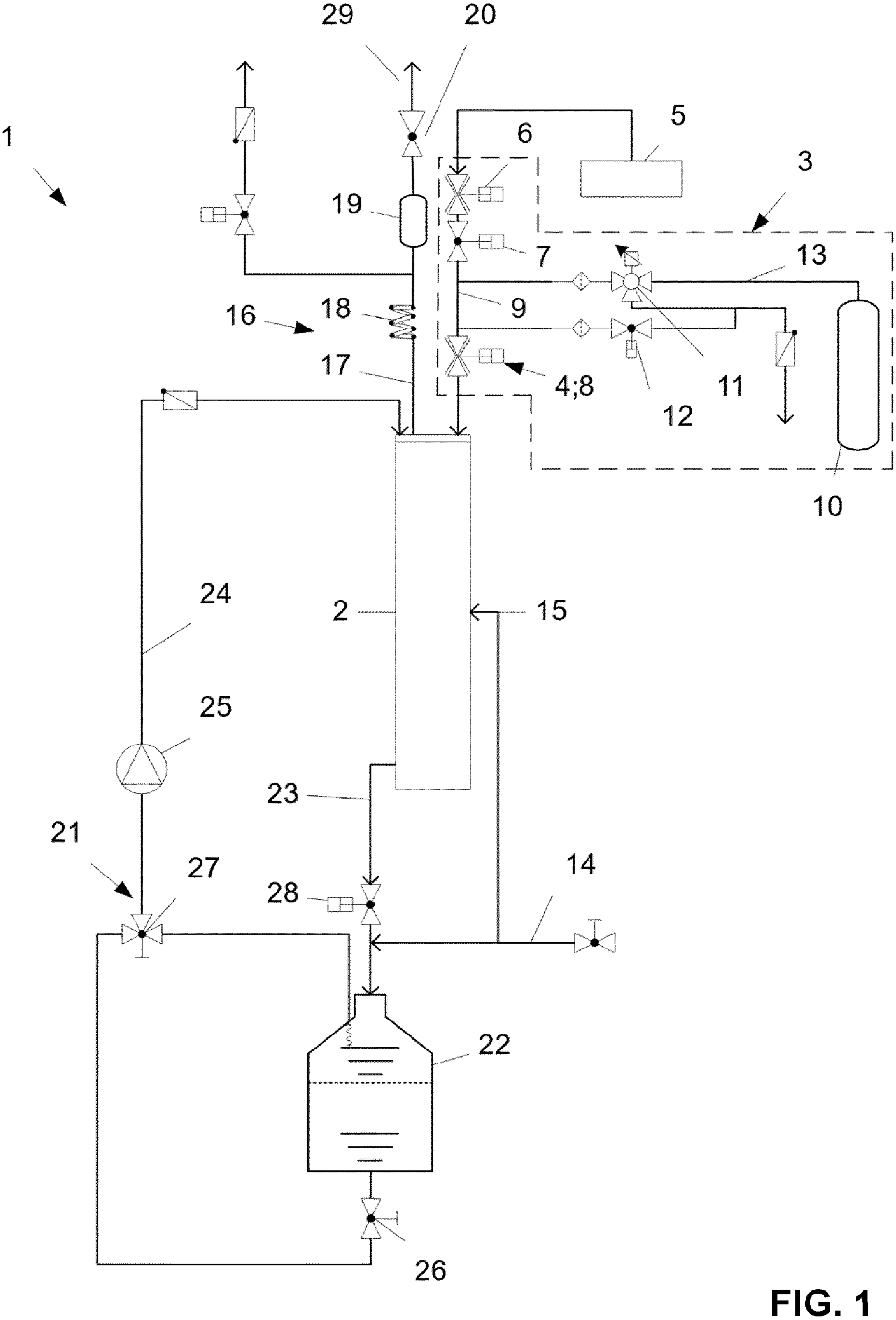


FIG. 1

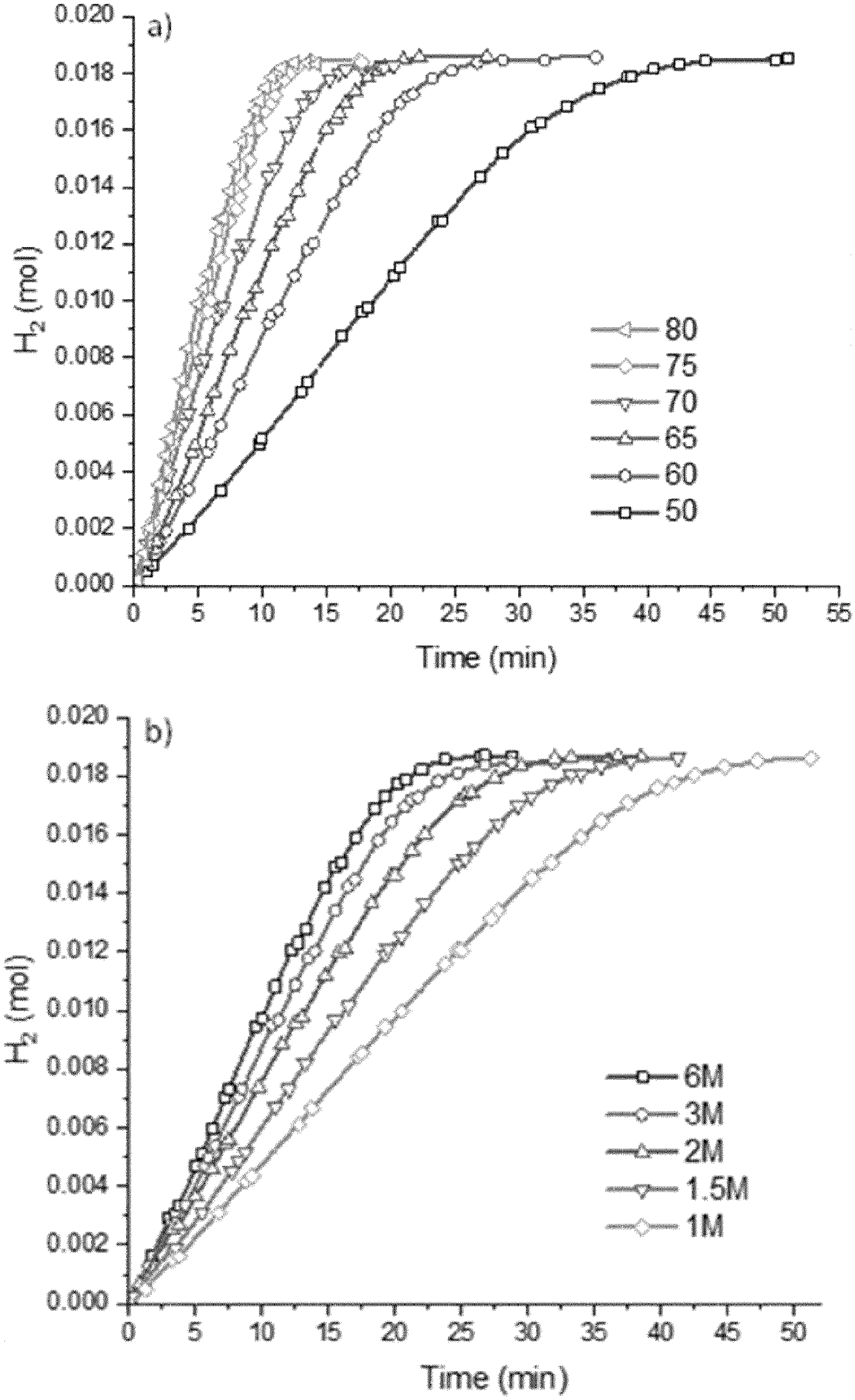


FIG. 2

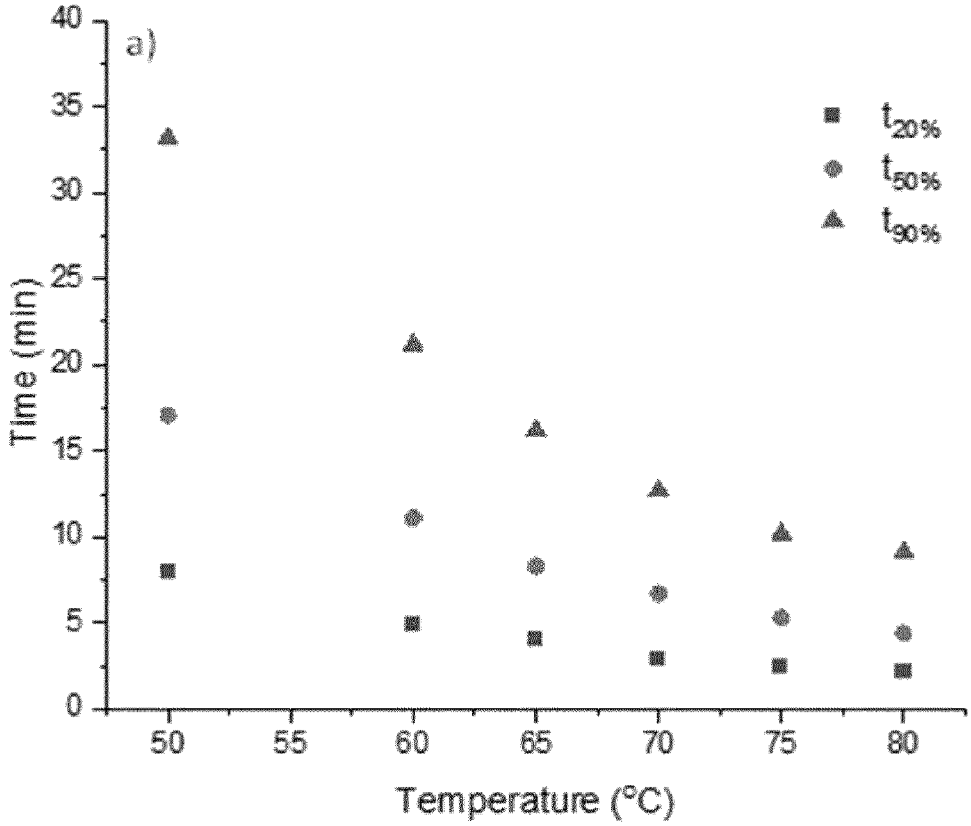
a)
Time (min)
Temperature (°C)
t20%
t50%
t90%
0
5
10
15
20
25
30
35
40
50
55
60
65
70
75
80

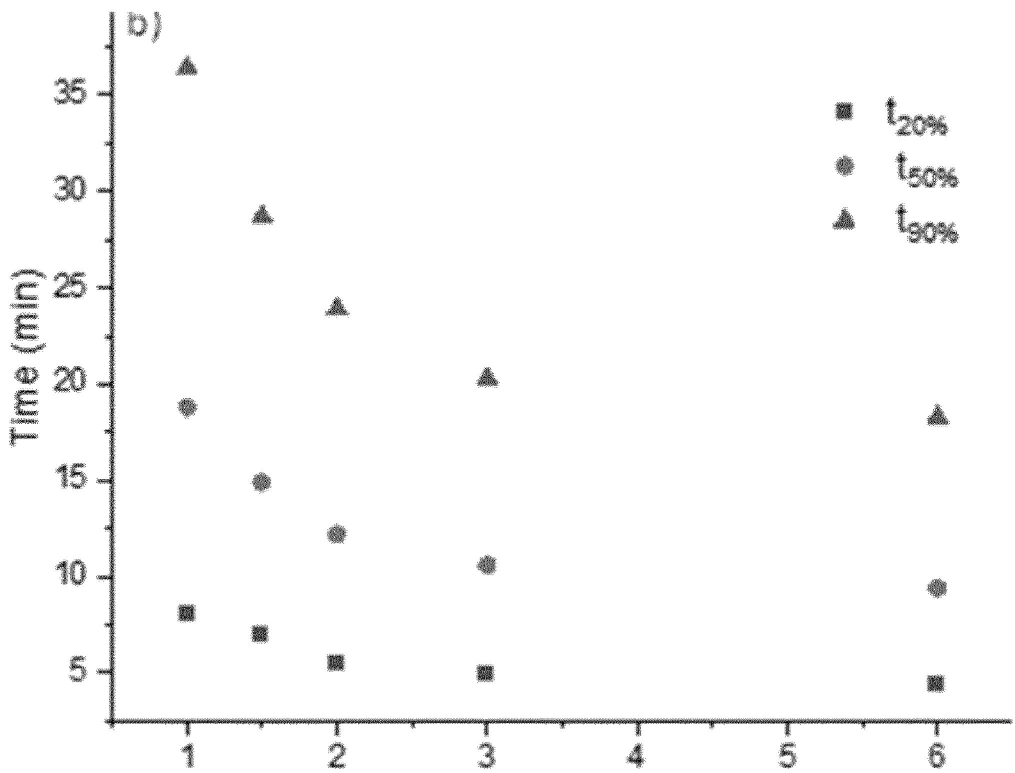
b)
Time (min)
NaOH molarity (M)
t20%
t50%
t90%
5
10
15
20
25
30
35
1
2
3
4
5
6

FIG. 3

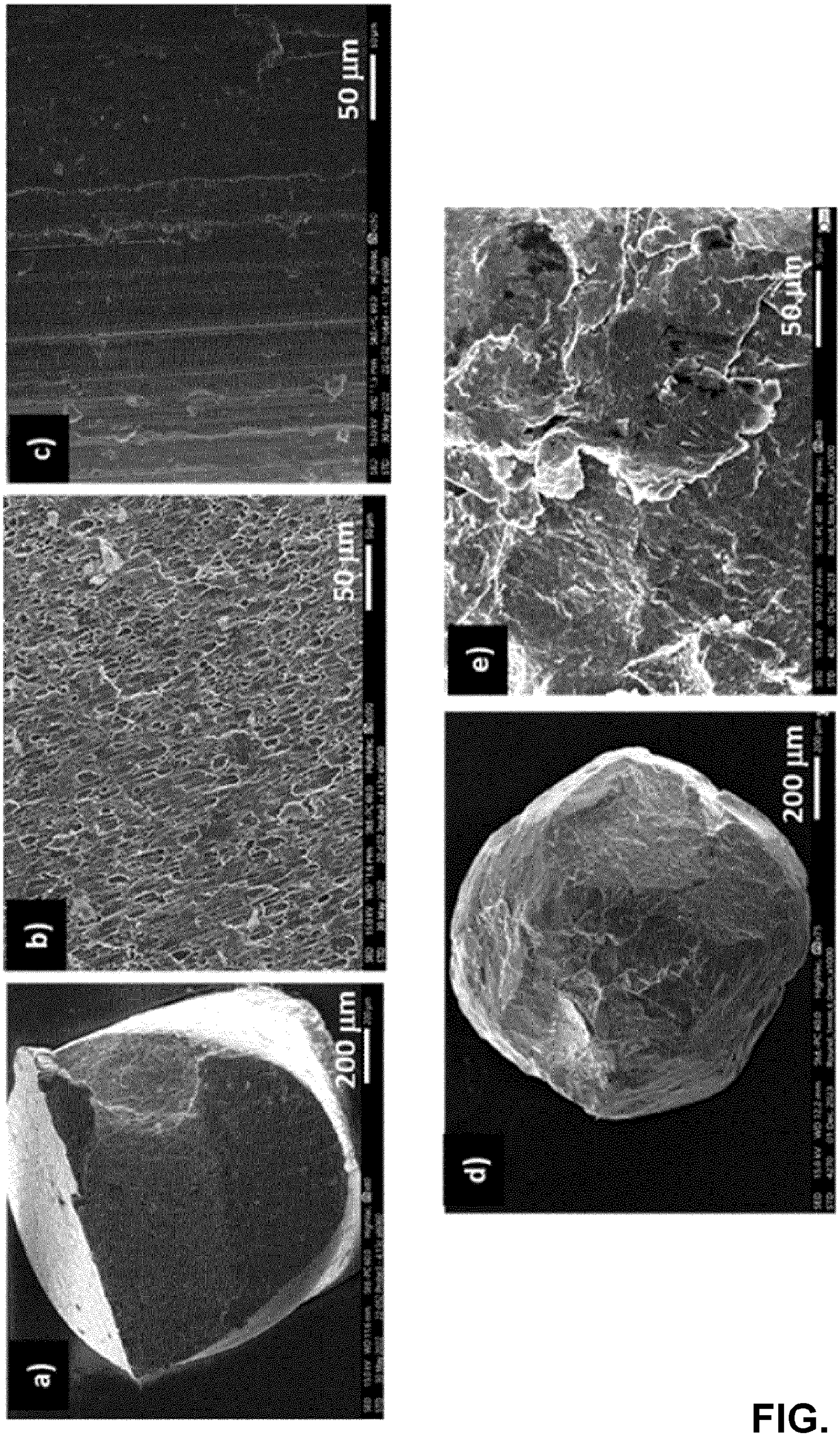


FIG. 4

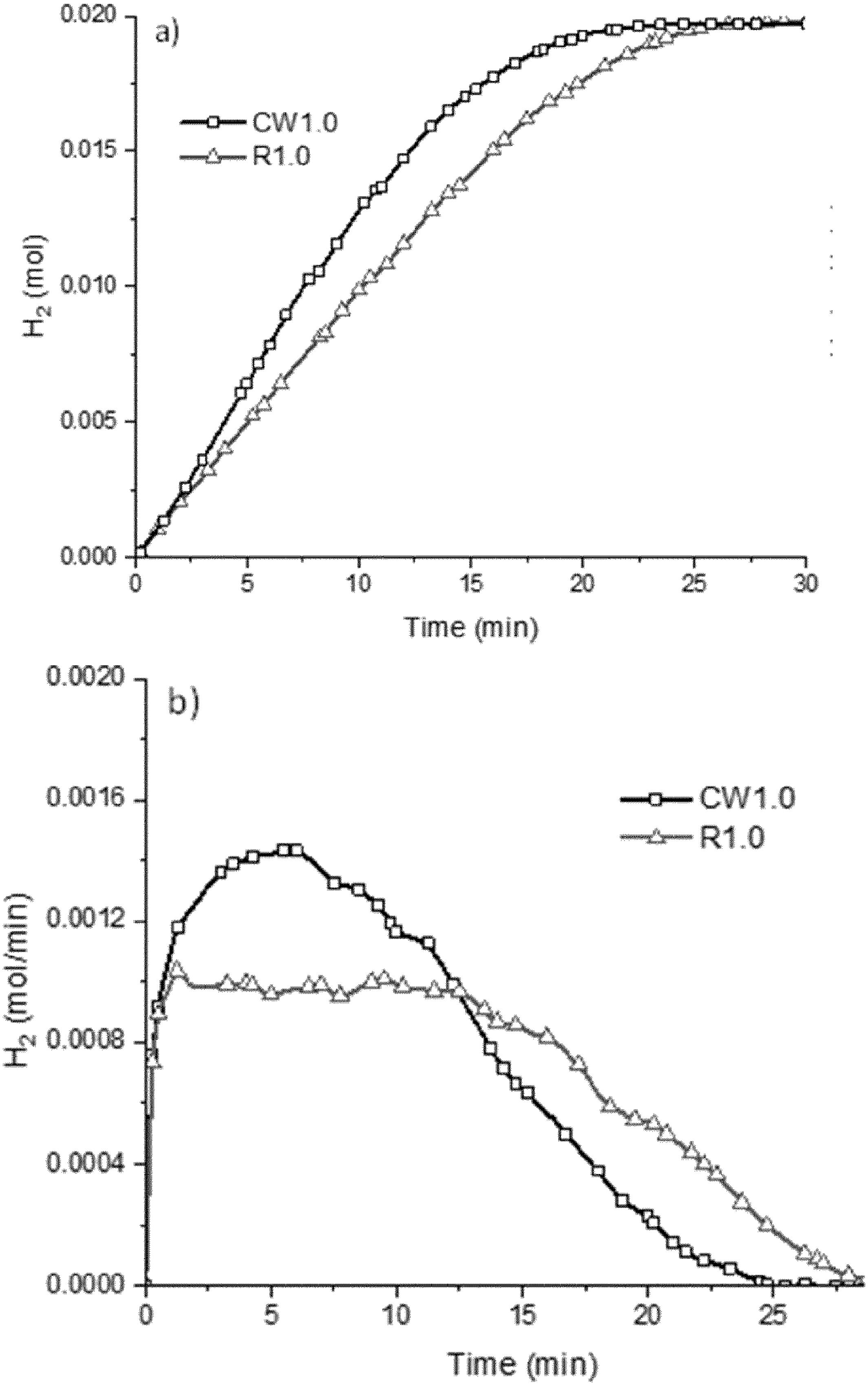
a)
CW1.0
R1.0
$H_2$ (mol)
0.000
0.005
0.010
0.015
0.020
0
5
10
15
20
25
30
Time (min)
b)
CW1.0
R1.0
$H_2$ (mol/min)
0.0000
0.0004
0.0008
0.0012
0.0016
0.0020
0
5
10
15
20
25
Time (min)

FIG. 5

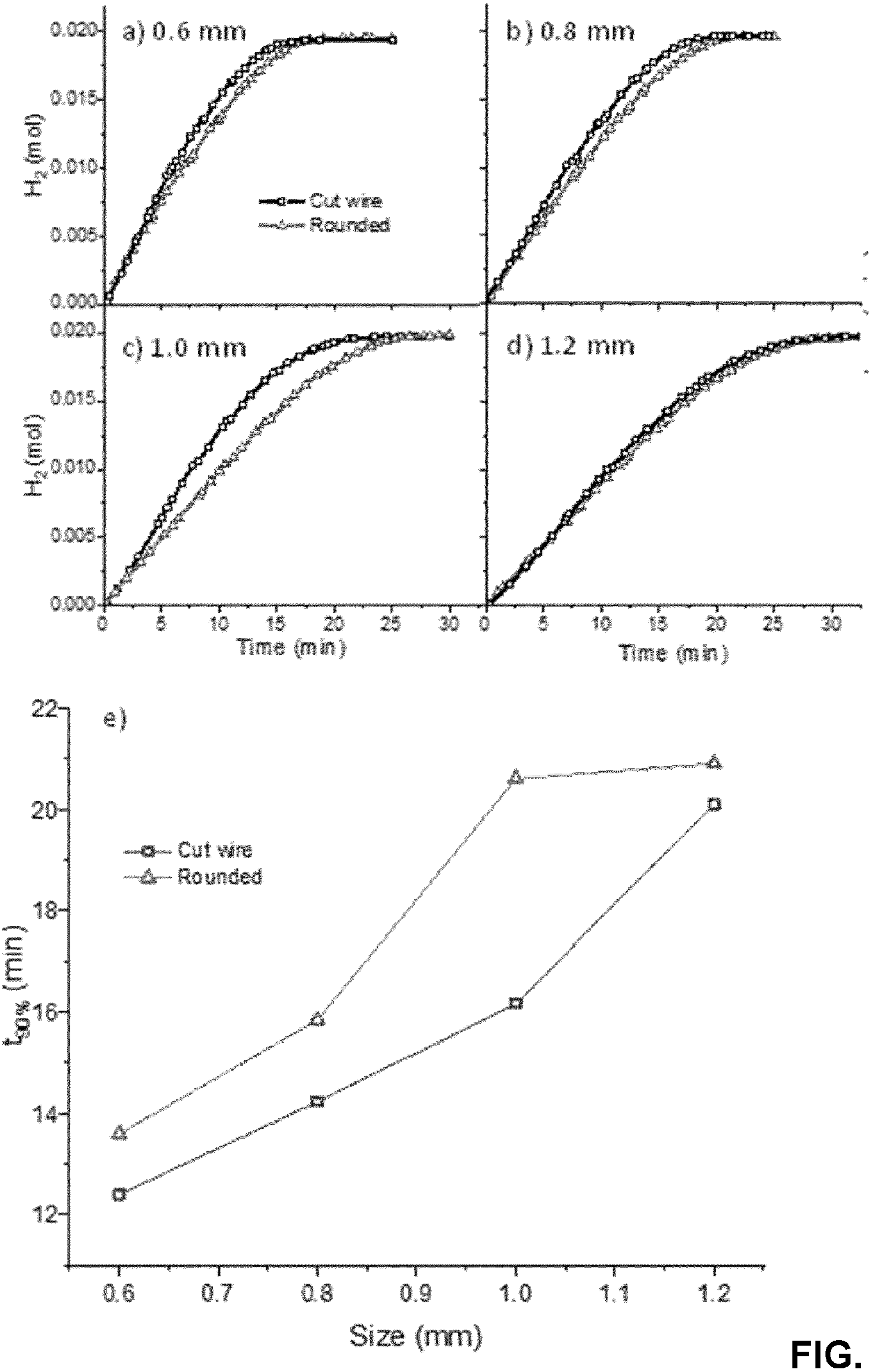
a) 0.6 mm
b) 0.8 mm
c) 1.0 mm
d) 1.2 mm
Cut wire
Rounded
$H_2$ (mol)
0.000
0.005
0.010
0.015
0.020
Time (min)
0 5 10 15 20 25 30
e)
$t_{90\%}$ (min)
12 14 16 18 20 22
Size (mm)
0.6 0.7 0.8 0.9 1.0 1.1 1.2

FIG. 6

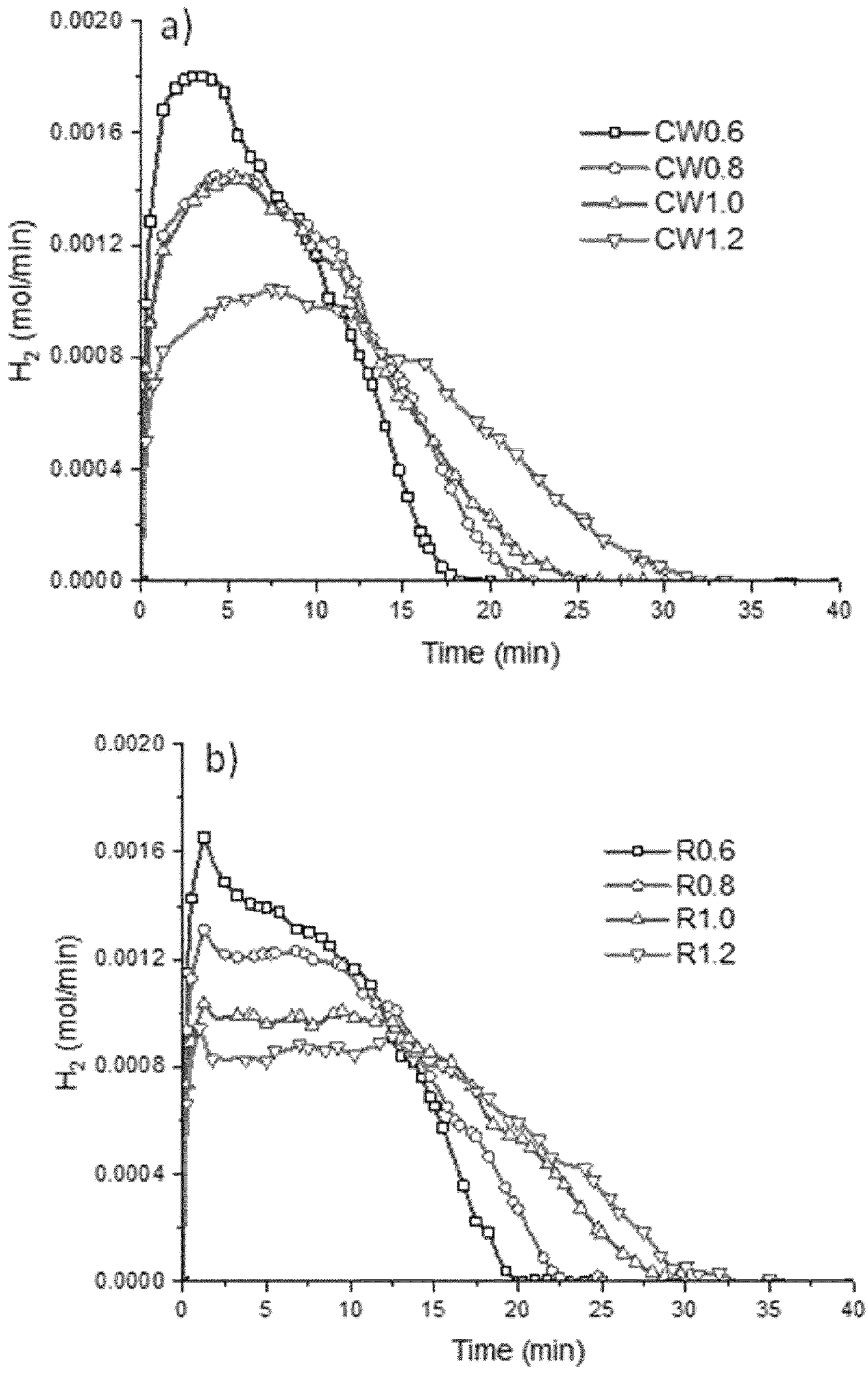
a)
0.0020
0.0016
0.0012
0.0008
0.0004
0.0000
H2 (mol/min)
0
5
10
15
20
25
30
35
40
Time (min)
CW0.6
CW0.8
CW1.0
CW1.2
b)
0.0020
0.0016
0.0012
0.0008
0.0004
0.0000
H2 (mol/min)
0
5
10
15
20
25
30
35
40
Time (min)
R0.6
R0.8
R1.0
R1.2

FIG. 7

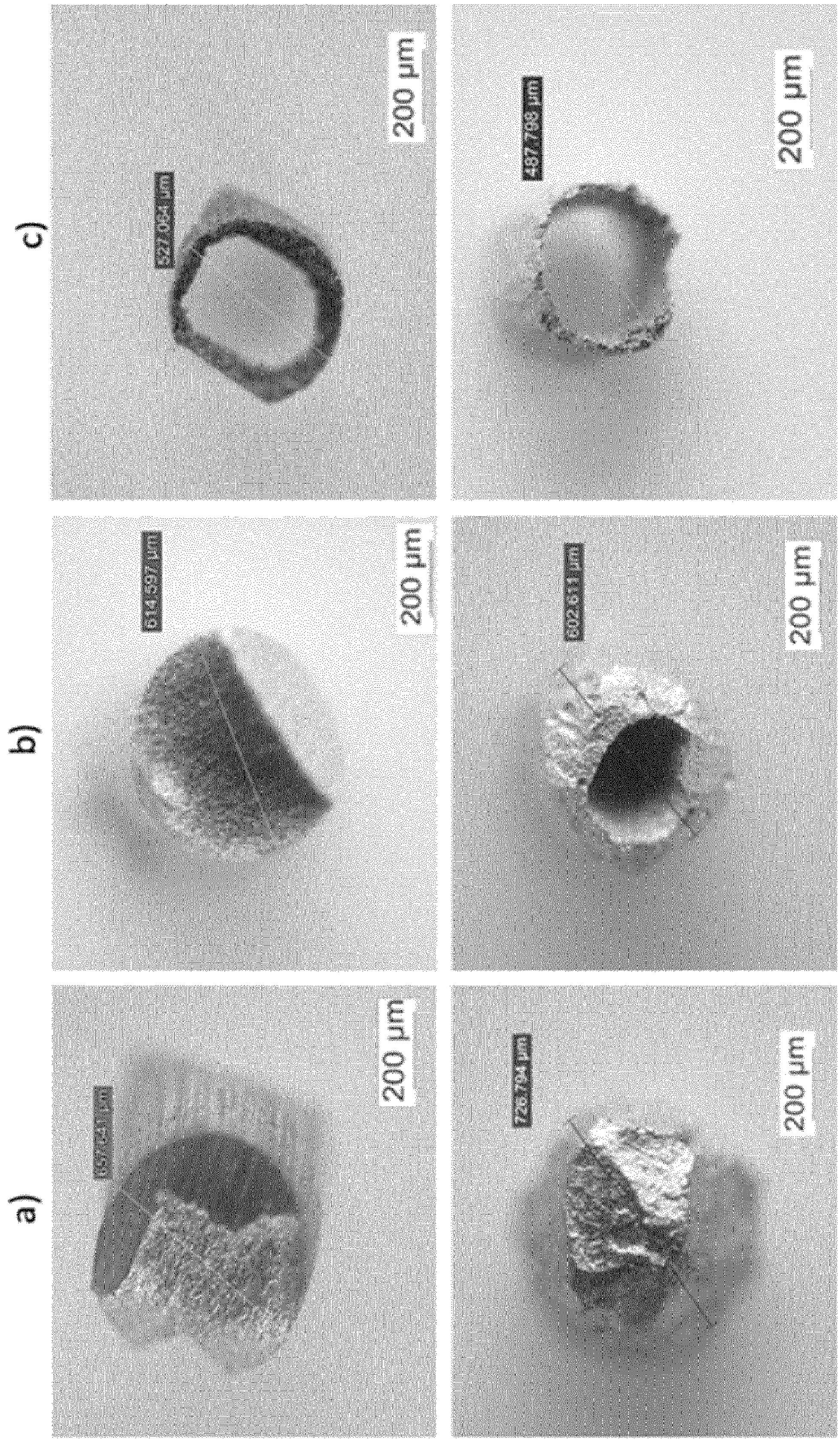


FIG. 8

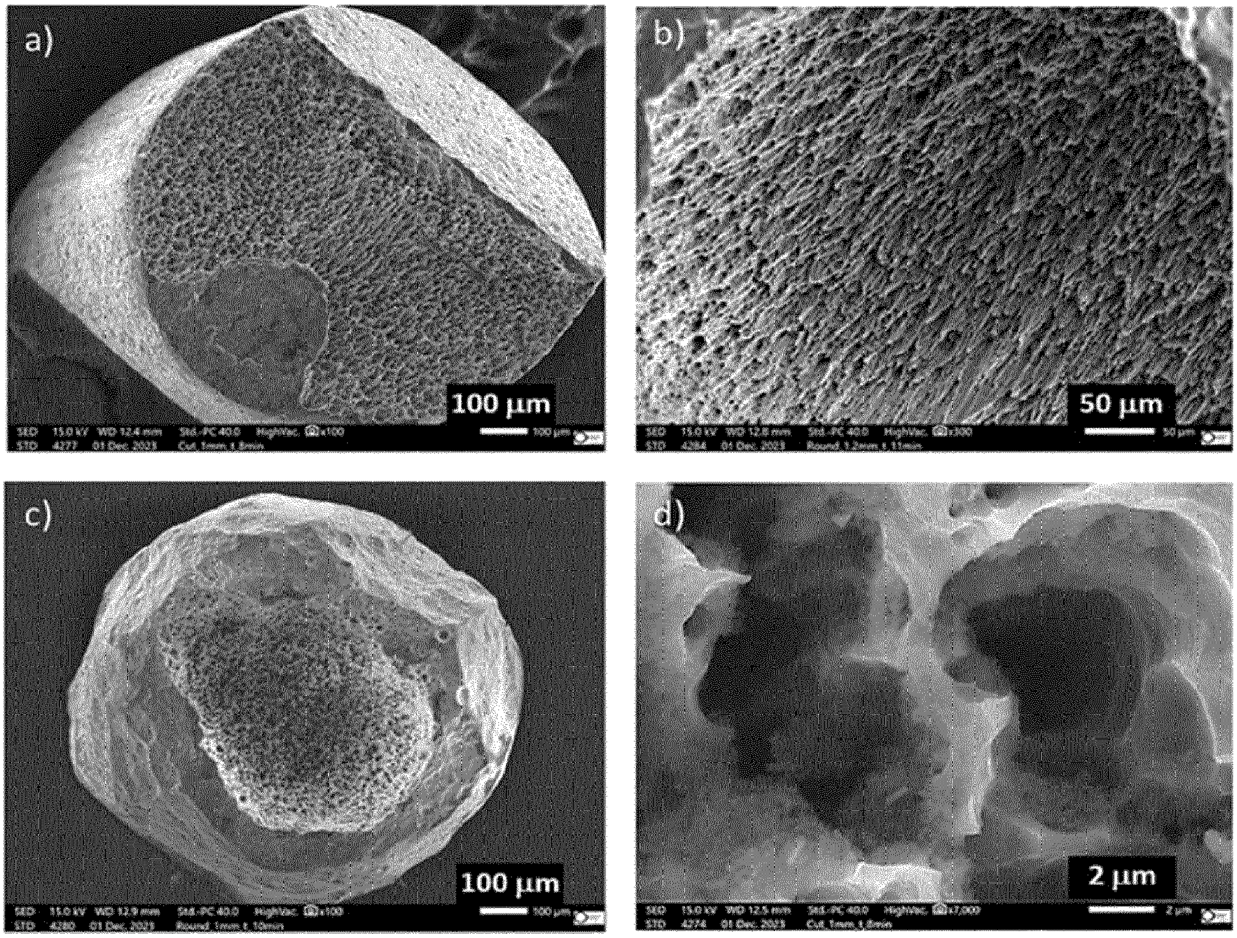


FIG. 9

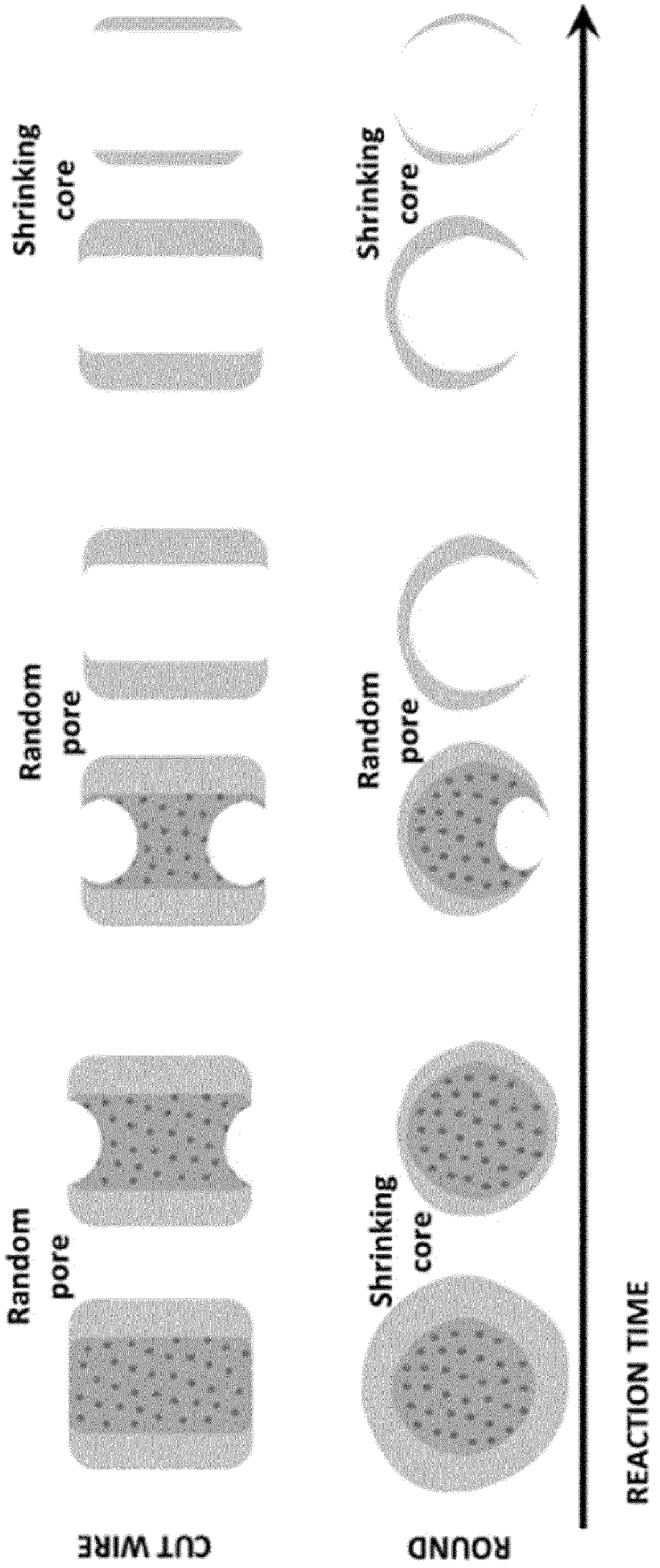
Random pore
Shrinking core
Random pore
Random pore
Shrinking core
Shrinking core
CUT WIRE
ROUND
REACTION TIME

FIG. 10

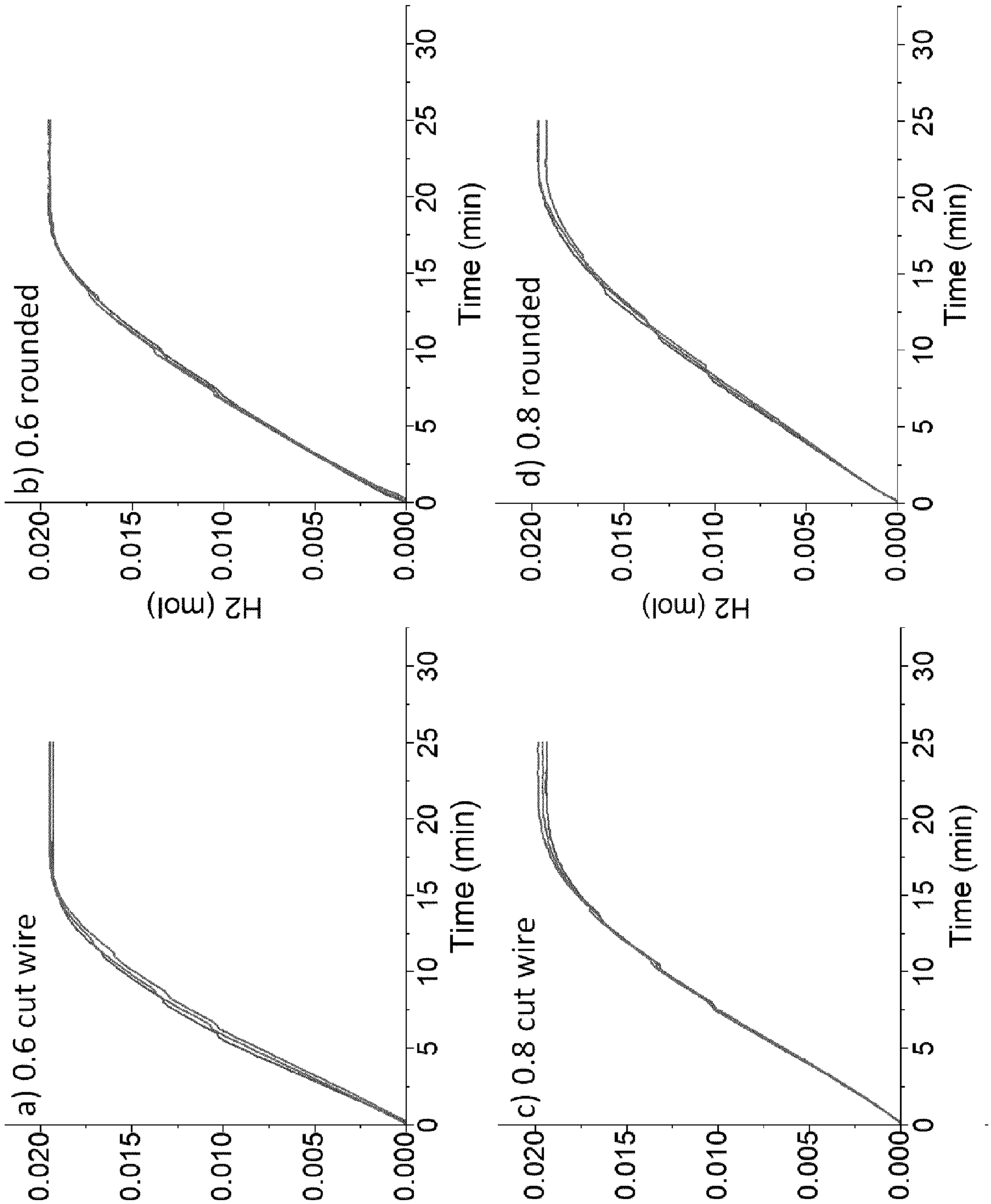
a) 0.6 cut wire
b) 0.6 rounded
c) 0.8 cut wire
d) 0.8 rounded
H2 (mol)
Time (min)
0.000
0.005
0.010
0.015
0.020
0
5
10
15
20
25
30

FIG. 11a-d

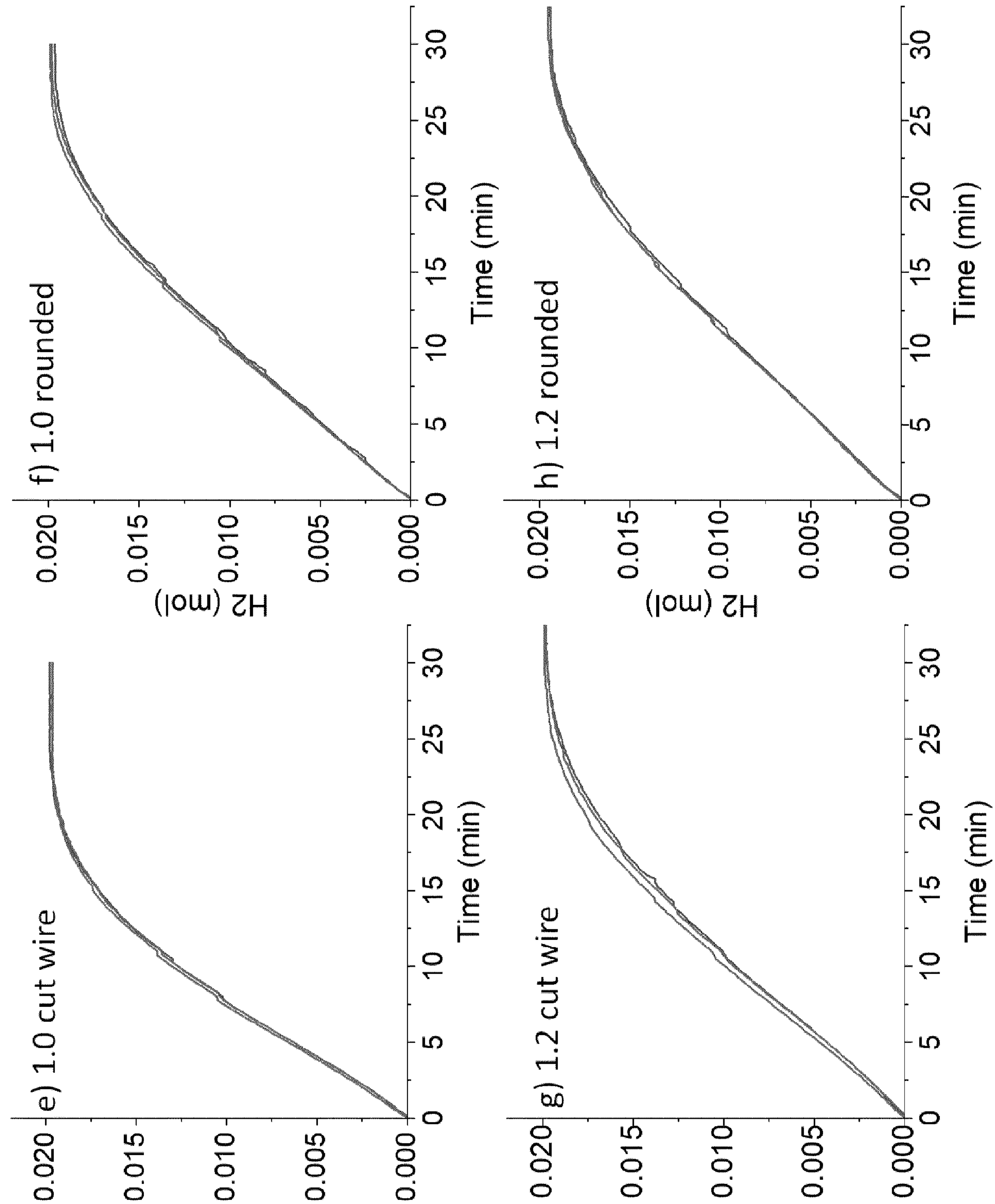
e) 1.0 cut wire
f) 1.0 rounded
g) 1.2 cut wire
h) 1.2 rounded
H2 (mol)
Time (min)
0.000
0.005
0.010
0.015
0.020
0
5
10
15
20
25
30

FIG. 11e-h

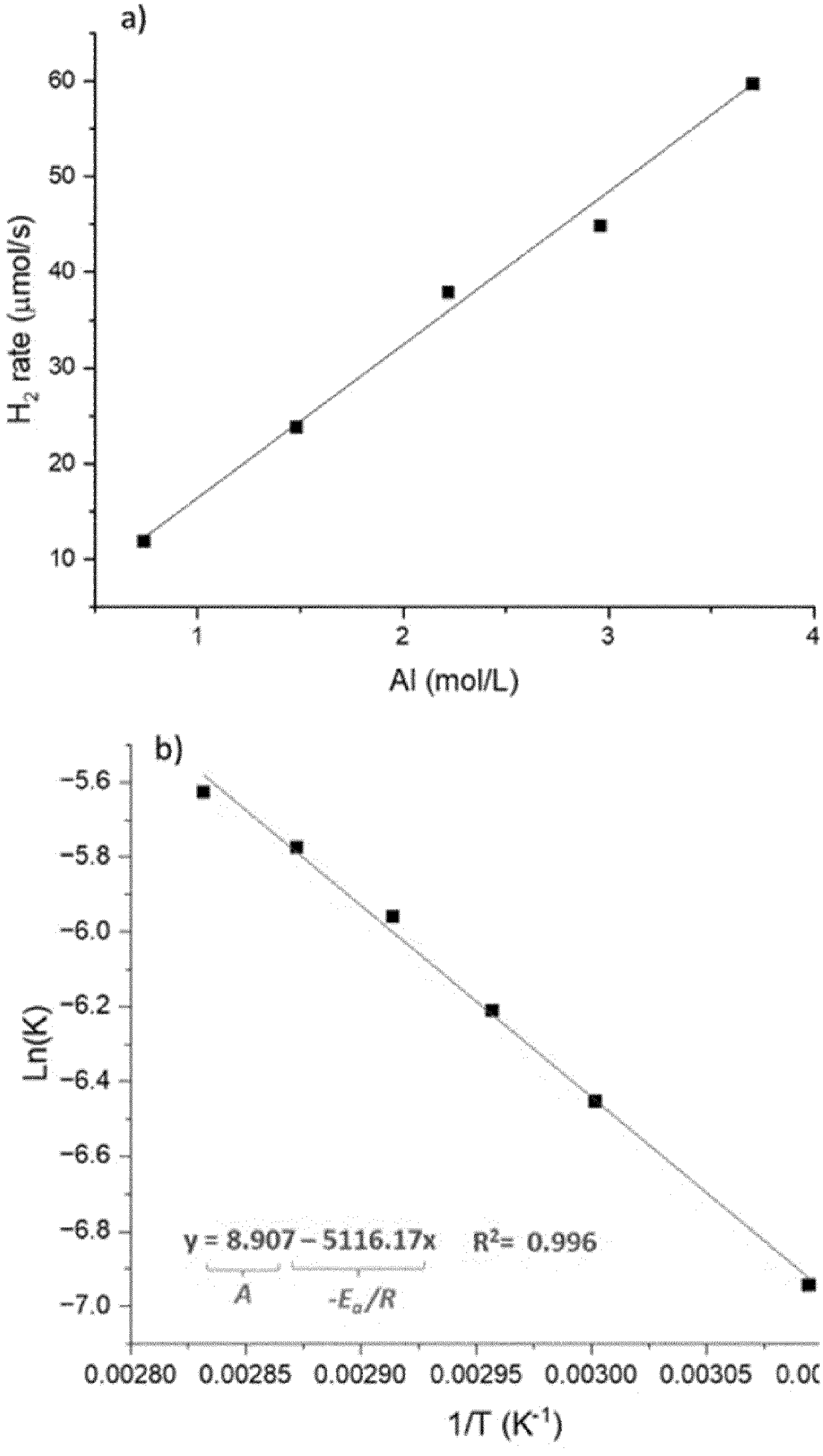
a)
H2 rate (µmol/s)
60
50
40
30
20
10
1
2
3
4
Al (mol/L)
b)
Ln(K)
-5.6
-5.8
-6.0
-6.2
-6.4
-6.6
-6.8
-7.0
y = 8.907 – 5116.17x
R² = 0.996
A
-Ea/R
0.00280
0.00285
0.00290
0.00295
0.00300
0.00305
0.0C
1/T (K-1)

FIG. 12

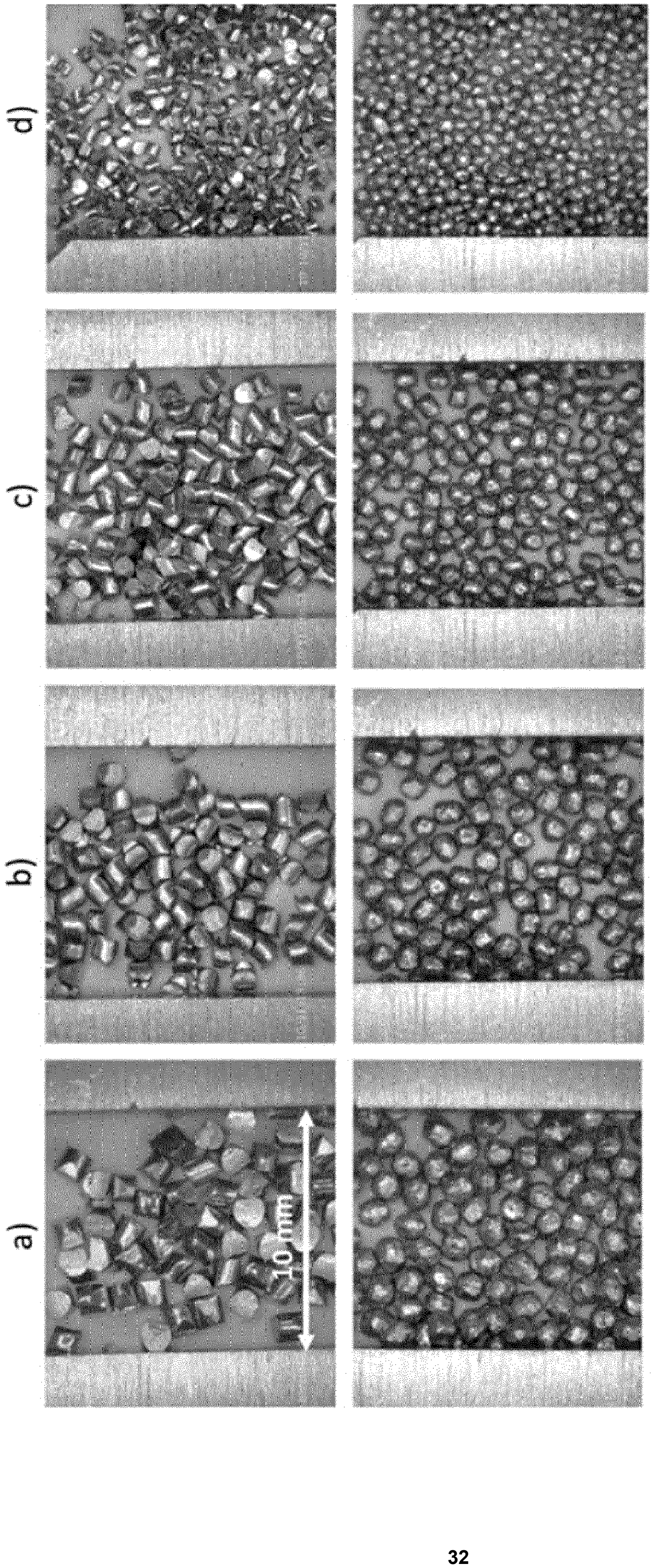


FIG. 13

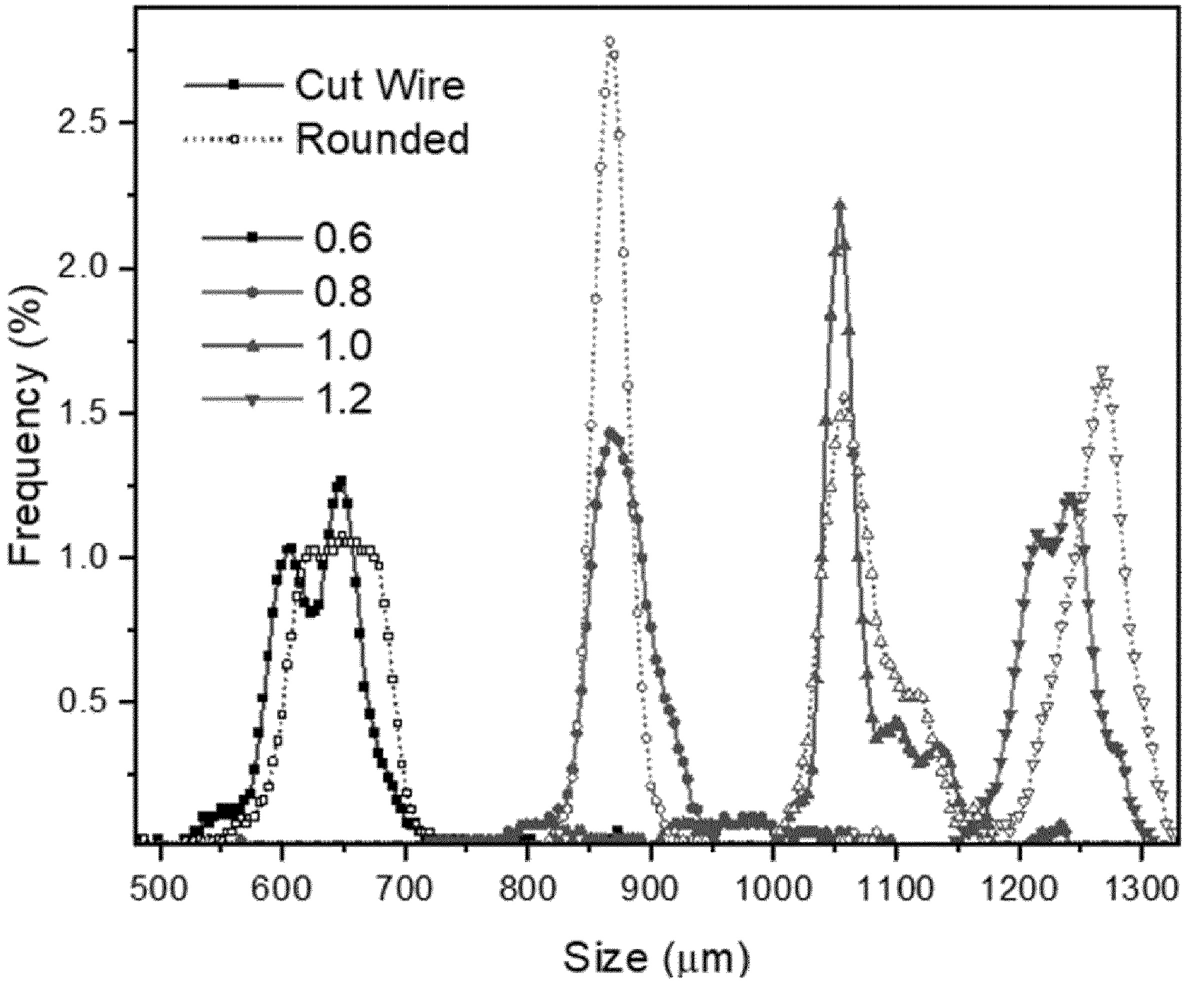
Cut Wire
Rounded
0.6
0.8
1.0
1.2
Frequency (%)
2.5
2.0
1.5
1.0
0.5
500
600
700
800
900
1000
1100
1200
1300
Size (μm)

FIG. 14

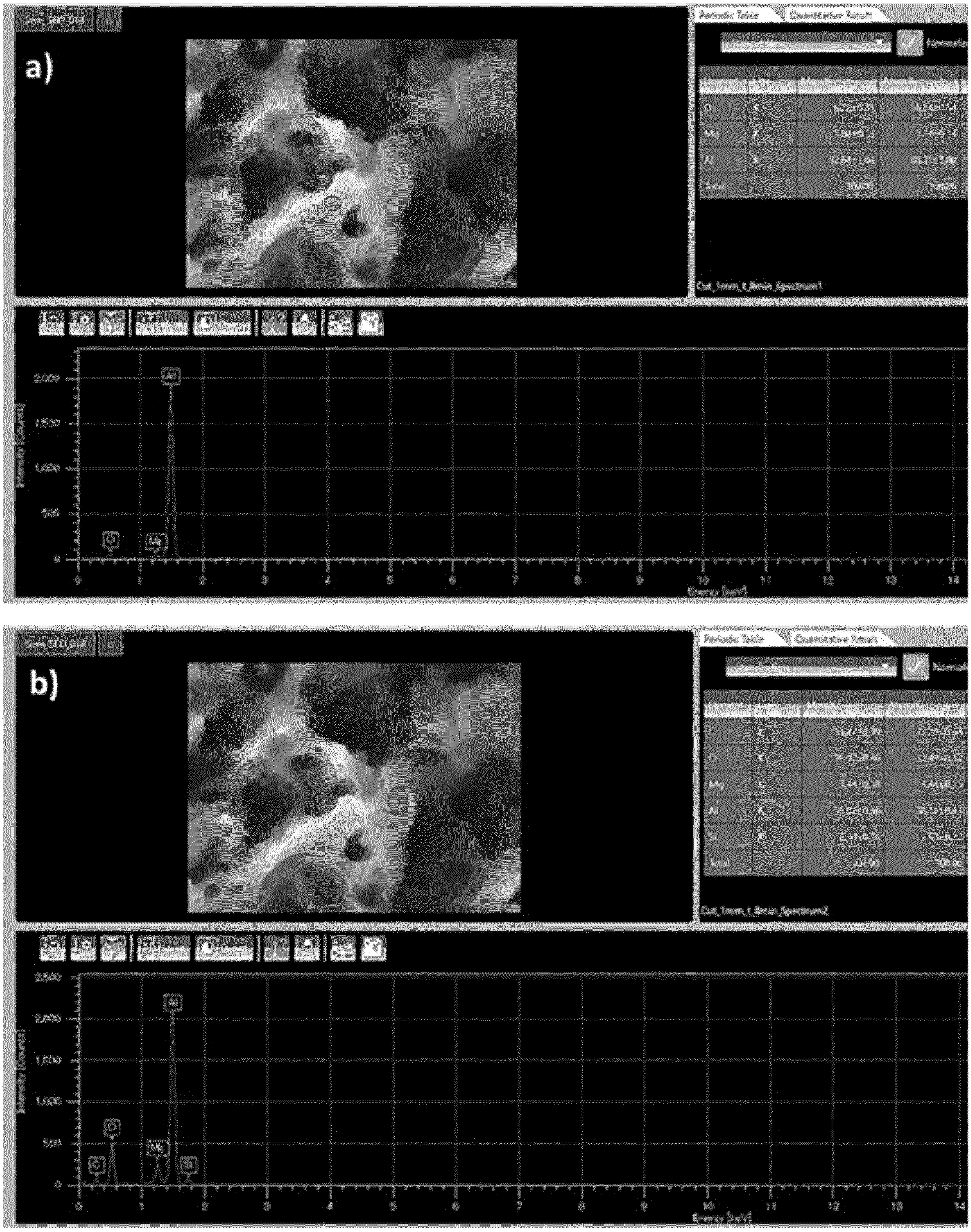


FIG. 15

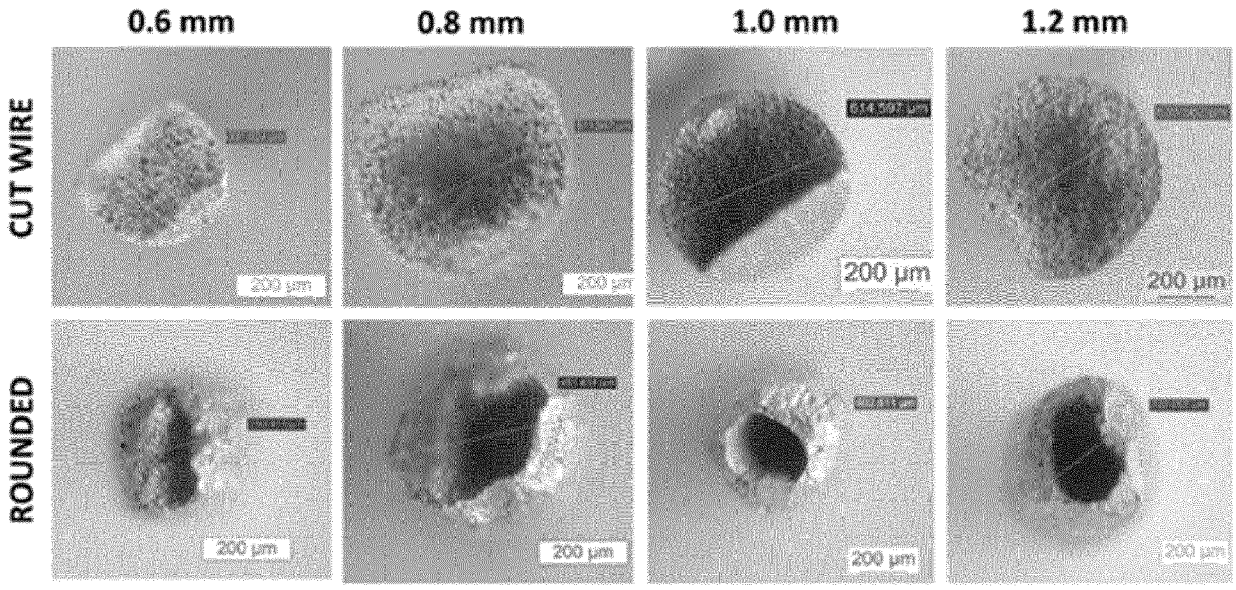


FIG. 16

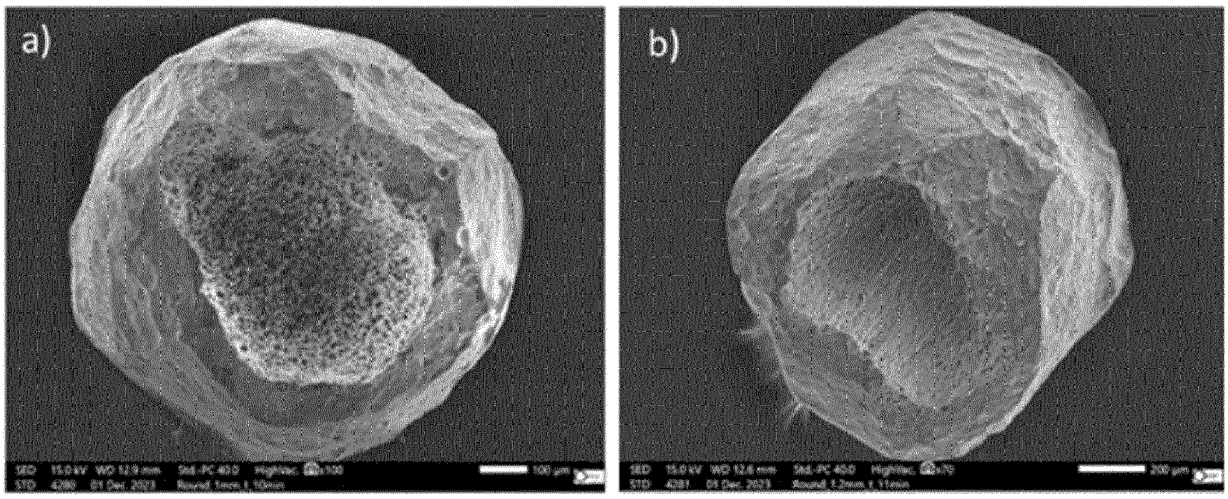


FIG. 17

Europäisches Patentamt
European Patent Office
Office européen des brevets

# EUROPEAN SEARCH REPORT

Application Number
EP 24 18 5404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/034479 A2 (HYDPO LTD [IL]; SERGIENKO ALEX [IL]; YASMAN YAKOV [IL]) 19 March 2009 (2009-03-19)<br>* example 10 *<br>* paragraphs [0034], [0038], [0039], [0042], [0058] *<br>* paragraph [0062]; figure 1 *<br>* paragraphs [0055], [0056]; figure 3 *<br>* paragraphs [0106], [0108]; figure 5 *<br>----- | 1-15 | INV.<br>C01B3/08 |
| X | EP 4 342 844 A1 (NET ZERO SCIENT LTD [GB]) 27 March 2024 (2024-03-27)<br>* paragraphs [0012], [0018], [0025], [0026], [0050], [0062], [0077], [0078]; examples *<br>* paragraph [0118] - paragraph [0126]; figure 1 *<br>----- | 1-15 | |

TECHNICAL FIELDS SEARCHED (IPC)

C01B

The present search report has been drawn up for all claims

1

| Place of search | Date of completion of the search | Examiner |
|---|---|---|
| The Hague | 26 November 2024 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 18 5404

This annex lists the patent family members relating to the patent documents cited in the above-mentioned European search report. The members are as contained in the European Patent Office EDP file on The European Patent Office is in no way liable for these particulars which are merely given for the purpose of information.

26-11-2024

| Patent document cited in search report | Publication date | Patent family member(s) | Publication date |
|---|---|---|---|
| WO 2009034479 A2 | 19-03-2009 | NONE | |
| EP 4342844 A1 | 27-03-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Recyclable metal fuels for clean and compact zero-carbon power. **J. M. BERGTHORSON**. Progress in Energy and Combustion Science. Elsevier Ltd, 01 September 2018, vol. 68, 169-196
- **K. A. TROWELL** ; **S. GOROSHIN** ; **D. L. FROST** ; **J. M. BERGTHORSON**. Aluminum and its role as a recyclable, sustainable carrier of renewable energy. *Appl Energy*, October 2020, vol. 275
- **M. Y. HALLER** ; **D. CARBONELL** ; **M. DUDITA** ; **D. ZENHAUSERN** ; **A. HÄBERLE**. Seasonal energy storage in aluminium for 100 percent solar heat and electricity supply. *Energy Conversion and Management: X*, January 2020, vol. 5
- **M. HALLER** ; **D. AMSTAD** ; **M. DUDITA** ; **D. CARBONELL** ; **D. ZENHÄUSERN**. *Hybrid Seasonal Storage of Renewable Heat and Electricity with an Aluminium Redox Cycle*, 2021
- **M. Y. HALLER** ; **D. AMSTAD** ; **M. DUDITA** ; **A. ENGLERT** ; **A. HÄBERLE**. Combined heat and power production based on renewable aluminium-water reaction. *Renew Energy*, August 2021, vol. 174, 879-893
- *AlEnCycles Aluminium-Redox-Cycles for the Production of Heat and Electricity for Buildings based on Renewable Energies 3O 2 4Al Electricity 12 Heat 4 Smelter with inert anodes*, 2020
- **M. SU** ; **H. HU** ; **J. GAN** ; **W. YE** ; **W. ZHANG** ; **H. WANG**. Thermodynamics, kinetics and reaction mechanism of hydrogen production from a novel Al alloy/NaCl/C3N4 composite by low temperature hydrolysis. *Energy*, March 2021, vol. 218
- **J. PETROVIC** ; **G. THOMAS**. Reaction of aluminum with water to produce hydrogen. *U.S. Department of Energy*, 2008, 1-26
- **L. OUYANG et al.** Recent progress on hydrogen generation from the hydrolysis of light metals and hydrides. *J Alloys Compd*, July 2022, vol. 910
- A review of unique aluminum-water based hydrogen production options. **A. BOLT** ; **I. DINCER** ; **M. AGELIN-CHAAB**. Energy and Fuels. American Chemical Society, 21 January 2021, vol. 35, 1024-1040
- **H. Z. WANG** ; **D. Y. C. LEUNG** ; **M. K. H. LEUNG** ; **M. NI**. A review on hydrogen production using aluminum and aluminum alloys. *Renewable and Sustainable Energy Reviews*, May 2009, vol. 13 (4.), 845-853
- **L. ESCOBAR-ALARCÓN** ; **J. L. ITURBE-GARCIA** ; **F. GONZALEZ-ZAVALA** ; **D. A. SOLIS-CASADOS** ; **R. PEREZ-HERNÁNDEZ** ; **E. HARO-PONIATOWSKI**. Hydrogen production by ultrasound assisted liquid laser ablation of Al, Mg and Al-Mg alloys in water. *Appl Surf Sci*, June 2019, vol. 478, 189-196
- Liquid metal activated aluminum-water reaction for direct hydrogen generation at room temperature. **S. XU** ; **X. ZHAO** ; **J. LIU**. Renewable and Sustainable Energy Reviews. Elsevier Ltd, 01 September 2018, vol. 92, 17-37
- **W. Z. GAI** ; **S. TIAN** ; **M. H. LIU** ; **X. ZHANG** ; **Z. Y. DENG**. Synergistic effect and mechanisms of ultrasound and AlOOH suspension on Al hydrolysis for hydrogen production. *Ultrason Sonochem*, November 2022, vol. 90
- **D. KUMAR** ; **K. MUTHUKUMAR**. An overview on activation of aluminium-water reaction for enhanced hydrogen production. *J Alloys Compd*, September 2020, vol. 835
- **P. DUPIANO** ; **D. STAMATIS** ; **E. L. DREIZIN**. Hydrogen production by reacting water with mechanically milled composite aluminum-metal oxide powders. *Int J Hydrogen Energy*, April 2011, vol. 36 (8), 4781-4791
- **M. Q. FAN** ; **F. XU** ; **L. X. SUN**. Studies on hydrogen generation characteristics of hydrolysis of the ball milling Al-based materials in pure water. *Int J Hydrogen Energy*, September 2007, vol. 32 (14), 2809-2815
- **Y. LIU et al.** Study on hydrogen generation from the hydrolysis of a ball milled aluminum/calcium hydride composite. *RSC Adv*, 2015, vol. 5 (74), 60460-60466
- **C. Y. HO** ; **C. H. HUANG**. Enhancement of hydrogen generation using waste aluminum cans hydrolysis in low alkaline de-ionized water. *Int J Hydrogen Energy*, February 2016, vol. 41 (6), 3741-3747
- **S. S. RAZAVI-TOUSI** ; **J. A. SZPUNAR**. Role of Ball Milling of Aluminum Powders in Promotion of Aluminum-Water Reaction to Generate Hydrogen. *Metallurgical and Materials Transactions E*, September 2014, vol. 1 (3), 247-256
- **S. S. RAZAVI-TOUSI** ; **J. A. SZPUNAR**. Effect of structural evolution of aluminum powder during ball milling on hydrogen generation in aluminum-water reaction. *Int J Hydrogen Energy*, January 2013, vol. 38 (2), 795-806

- **S. P. DU PREEZ** ; **D. G. BESSARABOV**. Hydrogen generation by the hydrolysis of mechanochemically activated aluminum-tin-indium composites in pure water. *Int J Hydrogen Energy*, November 2018, 21398-21413
- **H. WANG** ; **J. LU** ; **S. J. DONG** ; **Y. CHANG** ; **Y. G. FU** ; **P. LUO**. Preparation and hydrolysis of aluminum based composites for hydrogen production in pure water. *Mater Trans*, 2014, vol. 55 (6), 892-898
- **T. HE** ; **W. WANG** ; **W. CHEN** ; **D. CHEN** ; **K. YANG**. Reactivity of Al-rich Alloys with Water Promoted by Liquid Al Grain Boundary Phases. *J Mater Sci Technol*, April 2017, vol. 33 (4), 397-403
- **Q. AN et al.** Effects of Bi composition on microstructure and Al-water reactivity of Al-rich alloys with low-In. *Int J Hydrogen Energy*, June 2018, vol. 43 (24), 10887-10895
- **L. MEROUEH** ; **L. NEIL** ; **T. W. EAGAR** ; **D. P. HART**. Leveraging Grain Size Effects on Hydrogen Generated via Doped Aluminum-Water Reactions Enabled by a Liquid Metal. *ACS Appl Energy Mater*, January 2021, vol. 4 (1), 275-285
- **D. BELTISKUS**. Reaction of aluminum with sodium hydroxide solution as a source of hydrogen. *Electrochem. Soc.*, 1970, vol. 117 (8), 1097-1099
- **Y. A. ALEKSANDROV** ; **E. I. TSYGANOVA** ; **A. L. PISAREV**. Reaction of aluminum with dilute aqueous NaOH solutions. *Russ J Gen Chem*, 2003, vol. 73 (5), 729-734
- **V. G. GOPIENKO** ; **V. P. KISELEV** ; **N. S. ZOBNINA**. Methods of manufacture of Al powders and their fields of application. *Poroshkovaya Metallurgiya*, 1984, vol. 12, 926-930
- Review of solid state recycling of aluminum chips. **B. WAN** ; **W. CHEN** ; **T. LU** ; **F. LIU** ; **Z. JIANG** ; **M. MAO**. Resources, Conservation and Recycling. Elsevier B.V, 2017, vol. 125, 37-47
- **G. YI** ; **A. T. DERRICK** ; **Y. ZHU** ; **M. L. FREE**. A Collector Plate Mechanism-Based Classical Intergranular Precipitation Model for Al Alloys Sensitized at Different Temperatures. *Metall Mater Trans A Phys Metall Mater Sci*, November 2015, vol. 46 (11), 5393-5406
- **J. L. SEARLES** ; **P. I. GOUMA** ; **R. G. BUCHHEIT**. *Stress Corrosion Cracking of Sensitized AA5083 (Al-4.5Mg-1.0Mn)*
- **D. NICKEL** ; **D. DIETRICH** ; **T. MEHNER** ; **P. FRINT** ; **D. SPIELER** ; **T. LAMPKE**. Effect of strain localization on pitting corrosion of an AlMgSi0.5 alloy. *Metals (Basel)*, February 2015, vol. 5 (1), 172-191
- **J. K. BROSI** ; **S. M. SEIFI** ; **J. J. LEWANDOWSKI**. Delamination of sensitized Al-Mg alloy during fatigue crack growth in room temperature air. *Metallurgical and Materials Transactions A: Physical Metallurgy and Materials Science*, November 2012, 3952-3956
- **A. MEZULIS et al.** Studies on water-aluminum scrap reaction kinetics in two steps and the efficiency of green hydrogen production. *Energies (Basel)*, July 2023, vol. 16 (14)
- **V. N. ALVIANI et al.** Mechanisms and possible applications of the Al-H2O reaction under extreme pH and low hydrothermal temperatures. *Int J Hydrogen Energy*, November 2019, vol. 44 (57), 29903-29921
- **A. A. EL-AWADY** ; **B. A. ABD-EI-NABEY** ; **S. G. AZIZ**. *Thermodynamic and kinetic factors in chloride ion pitting of aluminium metal corrosion*, 1993, vol. 89 (5), 795-802
- **L. DONG** ; **I. MAZZARINO** ; **A. ALEXIADIS**. Development of solid-fluid reaction models-a literature review. *ChemEngineering*, September 2021, vol. 5 (3)
- **S. K. BHATIA** ; **D. 0 PERLMUTTER**. A random pore model for fluid-solid reactions. *AIChE Journal*, 1980, vol. 26 (3), 379-386
- **G. GRASA** ; **R. MURILLO** ; **M. ALONSO** ; **J. C. ABANADES**. Application of the random pore model to the carbonation cyclic reaction. *AIChE Journal*, May 2009, vol. 55 (5), 1246-1255